# EUROPÄISCHE PATENTSCHRIFT

(11) **EP 0 784 301 B1**
(45) Veröffentlichungstag und Bekanntmachung des Hinweises auf die Patenterteilung: **16.10.2002**
(21) Anmeldenummer: 97100003.9
(22) Anmeldetag: 02.01.1997
(51) Int. Cl.: G07F 7/08

(54) **Verfahren und System zum Bezahlen von Leistungen sowie tragbarer Datenträger für ein derartiges System**
Method and system for the payment of services and portable data carrier to be used in such a system
Méthode et système pour le paiement de services et support de données portable à utiliser dans un tel système

(30) Priorität: 08.01.1996 DE 19600383; 09.03.1996 DE 19609307; 08.05.1996 DE 19620412; 22.05.1996 US 651754
(43) Veröffentlichungstag der Anmeldung: 16.07.1997
(73) Patentinhaber: Dethloff, Jürgen, 22605 Hamburg (DE)
(72) Erfinder: Dethloff, Jürgen, 22605 Hamburg (DE)

(56) Entgegenhaltungen:
- EP-A- 0 546 584
- EP-A- 0 646 898
- WO-A-90/15382
- DE-A- 4 243 851
- FR-A- 2 637 710
- FR-A- 2 696 888
- US-A- 5 521 362

## Beschreibung

Die Erfindung betrifft ein Verfahren zum Bezahlen von in Anspruch genommenen oder zu nehmenden Leistungen von Leistungsanbietern mittels tragbarer Datenträger, von denen jeder einen Speicher mit wenigstens zwei Speicherabschnitten enthält, von denen wenigstens ein erster Speicherabschnitt und ein zweiter Speicherabschnitt fiir die Aufnahme von insbesondere einen Geldbetrag darstellenden Daten vorgesehen ist, wobei zum Einschreiben von Daten in den ersten Speicherabschnitt eines Datenträgers dieser mit einem von mehreren ersten Terminals in Wirkverbindung gebracht wird, um abhängig von einer ersten Bedienung des ersten Terminals einen vorgebbaren Geldbetrag von dem zweiten Speicherabschnitt des Datenträgers abzubuchen und in den ersten Speicherabschnitt einzuschreiben, und zur Inanspruchnahme einer Leistung eines Leistungsanbieters der Datenträger mit einem zweiten Terminal in Wirkverbindung gebracht und ein Geldbetrag aus dem ersten Speicherabschnitt abgebucht wird.

Ein derartiges Verfahren ist aus der EP 0 546 584 A1 bekannt. Dabei sind in dem Speicher Daten gespeichert, die vorzugsweise Geldbeträge darstellen. Zum Einschreiben solcher verfügbare Geldbeträge darstellender Daten wird der Datenträger durch den Benutzer mit einem Terminal beispielsweise seiner Hausbank in Wirkverbindung gebracht. Das Terminal löst den Einschreibvorgang aus und bucht von dem Konto des Benutzers den entsprechenden Geldbetrag ab.Dies entspricht dem Abheben von Bargeld bei der Bank, wobei das Bargeld nun lediglich nicht in Form von Banknoten, sondern als "elektronisches Geld" dem Benutzer zur unmittelbaren Verfügung steht. Wenn der Benutzer eine Leistung eines Leistungsanbieters in Anspruch nehmen will, z.B. den Kauf von Waren oder die Benutzung einer Dienstleistung, bringt der Benutzer seinen Datenträger mit einem tragbaren Terminal in Verbindung und gibt darüber den abzubuchenden Betrag ein. Dadurch wird im Datenträger dieser abzubuchende Betrag in einen weiteren Speicher übertragen, aus dem er anschließend über ein Terminal des Leistungsanbieters in einen zweiten Datenträger übertragen wird. Vor der Übertragung in den weiteren Speicher kann eine gegenseitige Zertifizierung zwischen Datenträger und Terminal erfolgen, um die Gültigkeit des zu übertragenden Geldbetrags zu garantieren, und dieser wird danach mit einer elektronischen Kennzeichnung versehen. Diese kann bei der Gutschrift des Betrages auf das Konto des Leistungsanbieters in dessen Bank geprüft werden, um beim Abbuchen von dem ersten Datenträger beim Leistungsanbieter eine gesonderte Meldung vorab an dessen Bank zu erübrigen. Dieses bekannte Verfahren hat jedoch den Nachteil, daß ein erster Datenträger, der noch einen Geldbetrag enthält und der verloren oder gestohlen wird, von einer anderen Person, die ebenfalls an dem bekannten Verfahren teilnimmt und daher auch ein zertifiziertes tragbares Terminal besitzt, mißbräuchlich zum Bezahlen von Leistungen benutzt werden kann.

Aus der US 48 59 837 A ist ein tragbarer Datenträger bekannt, der mehrere getrennte Speicher enthält, von denen Geldbeträge nach außen übertragen werden können, wobei die Speicher verschiedenen Konten des Benutzers des Datenträgers zugeordnet sind. Die Übertragung eines Geldbetrags nach außerhalb ist jedoch nur möglich, wenn vorher eine Geheimzahl von dem Benutzer in den Datenträger eingegeben worden ist. Lediglich einer der Speicher ist keinem Konto zugeordnet und von außerhalb ohne Eingabe einer Geheimzahl zugreifbar. Der bekannte Datenträger enthält eine Batterie und weist femer eine Anzeigeeinheit und Tasten auf, über die eine Geheimzahl und auch ein Geldbetrag eingegeben werden kann, um von einem der durch Geheimzahl geschützten Speicher einen Geldbetrag nach außerhalb oder in den ungeschützten Speicher zu übertragen. Durch die Batterie, die Anzeigeeinheit und die Tasten ist der Datenträger kaum so klein wie eine Scheckkarte preiswert herzustellen, und die verschiedenen Möglichkeiten der Abbuchung von einem der Speicher erfordert eine umständliche Bedienung und eine aufwendige Steuerung in dem Datenträger.

Die DE 44 41 413 A1 beschreibt ein Datenaustauschgerät mit einem tragbaren Datenträger, der einen Speicher zum Speichern eines Geldbetrages enthält. Aus diesem Speicher können Geldbeträge nur nach vorheriger Eingabe einer Geheimzahl abgebucht werden. Lediglich die Bezahlung kleinerer Geldbeträge ist ohne Geheimzahl möglich, wobei die maximale Summe der abbuchbaren kleineren Geldbeträge festgelegt ist. Ein unrechtmäßiger Benutzer, der die Geheimzahl nicht kennt, kann also nur diese maximale Summe der Geldbeträge verbrauchen, so daß der Schaden für den rechtmäßigen Besitzer des Datenträgers begrenzt bleibt. Die maximale Summe ist jedoch im Datenträger unveränderbar festgelegt, und sie kann für eine sinnvolle Benutzung nicht zu klein gewählt werden, so daß bei Verlust des Datenträgers dennoch ein merkbarer Schaden fiir den rechtmäßigen Inhaber entsteht. Die Verwendung eines zusätzlichen Geldspeichers in dem Datenträger, von dem ohne Geheimzahl Geldbeträge abgebucht werden können, wird ausdrücklich als aus verschiedenen Gründen nicht sinnvoll bezeichnet.

Es ist bereits ein System unter dem Namen Mondex bekannt, bei dem ein Benutzer eine elektronische Einrichtung in Form etwa einer Brieftasche hat, die eine Anzeige und eine größere Anzahl Tasten sowie einen Speicher aufweist. In diesem Speicher sind Geldbeträge darstellende Daten gespeichert. Ferner weist die elektronische Brieftasche eine Aufnahme fiir einen tragbaren Datenträger in Form einer Chipkarte auf, der ebenfalls einen Speicher enthält. Wenn der Datenträger in die Aufnahme der Brieftasche eingeführt ist, kann durch Tastenbetätigung ein wählbarer Geldbetrag von dem Speicher der Einrichtung abgebucht und in den Speicher des Datenträgers übertragen werden. Dieser Datenträger kann dann wie Bargeld benutzt werden, wenn der Leistungsanbieter ein entsprechendes Terminal besitzt, mit dem Geldbeträge von diesem Datenträger abgebucht werden können. Insbesondere wenn die Brieftasche, die größere Beträge gespeichert enthalten kann, aus Sicherheitsgründen dritten Orts, z.B. im Hause des Benutzers bzw. Inhabers, aufbewahrt wird, wird in den Datenträger üblicherweise ein größerer Geldbetrag übertragen, als für die Bezahlung einer einzelnen Leistung erforderlich ist. Dadurch weist dieses System fiir den Benutzer eine ähnliche Unsicherheit gegenüber einem irrtümlich oder betrügerisch handelnden Leistungsanbieter auf wie Datenträger mit unmittelbar zugänglichen Geldspeichern, in die unmittelbar von einer Bank Geldbeträge in Form von Daten übertragen werden, und es ist umständlich zu handhaben.

Aufgabe der Erfindung ist es, ein Verfahren der eingangs genannten Art zum Bezahlen von Leistungen anzugeben, das einfach anwendbar ist und bei dem die gleichen Terminals zum Abbuchen von Geldbeträgen verwendet werden können wie bisher für bekannte Scheckkarten mit einem Geldspeicher, wobei die in dem Datenträger enthaltenen Geldbeträge geschützt sind.

Zur Lösung dieser Aufgabe wird eine eindeutige individuelle Zuordnung zwischen jeweils einem Datenträger und einem Terminal verwendet, die im Besitz eines bestimmten Benutzer sind. Die Übertragung eines Geldbetrags aus dem zweiten Speicher des Datenträgers, in den von dem Bankkonto des Benutzers ein Geldvorrat eingeschrieben worden ist, in den ersten Speicher, der von außen für einen Leistungsanbieter zugänglich ist, kann also nur mit Hilfe des einzigen, diesem Datenträger zugeordneten Terminal vorgenommen werden. Daher ist ein verlorener oder gestohlener Datenträger allein für eine andere Person, auch wenn diese ein Terminal besitzt, wertlos. Dadurch ist es wahrscheinlicher, daß ein verlorener Datenträger von einem Finder zurückgegeben wird, und die Gefahr eines Diebstahls ist nicht mehr gegeben.

Der zweite Speicher bzw. Speicherabschnitt, der Geldbeträge nur von außen aufnehmen kann und intern verfügbar hält und aus dem nur intern innerhalb des Datenträgers Geldbeträge in den bzw. einen der ersten Speicher übertragen werden, wird nachfolgend daher auch als interner Speicher und der erste Speicher als weiterer Speicher bezeichnet.

Es sei bemerkt, daß in allen Fällen, wo die Speicherung oder Übertragung eines Geldbetrags angegeben wird, auch andere Werteinheiten gemeint sein können, die als Daten gespeichert bzw. übertragen werden. Dabei können die Mengen der Geldbeträge bzw.Werteinheiten von den Daten direkt oder durch beliebige Verschlüsselung über z. B. kryptologische Berechnungen und damit zusammenhängende Protokolle abgeleitet werden.

Um eine eindeutige Zuordnung herzustellen, sind beispielsweise in dem ersten Terminal und in dem Datenträger entsprechende geheime Codes gespeichert, und eine Übertragung von dem Geldspeicher in den weiteren Speicher erfolgt nur, wenn eine Prüfung dieser Codes in dem Datenträger und gegebenenfalls in dem ersten Terminal erfolgreich durchgeführt worden ist. Die Übertragung des Geldbetrags von dem Datenträger zum Leistungsanbieter kann dann ohne weiteren Schutz erfolgen. Die geheimen Codes in dem Datenträger und in dem ersten Terminal können dadurch erzeugt werden, daß von einer Bank beide Elemente nur zusammen ausgegeben werden, wobei dann die Codes bei der Herstellung der beiden Elemente oder bei deren Ausgabe eingeschrieben werden. Alternativ kann beim erstmaligen Verbinden eines neuen Datenträgers mit einem neuen ersten Terminal der geheime Code automatisch in dem Datenträger oder in dem Terminal erzeugt und in das jeweils andere Element direkt oder nach Umwandlung über einen geheimen Algorithmus übertragen und dort gespeichert werden, oder in einem der beiden Elemente ist bereits bei der Herstellung oder bei der Ausgabe ein Code gespeichert worden, der beim erstmaligen Verbinden in das andere Element in entsprechender Weise übertragen und gespeichert wird.Eine weitere Möglichkeit besteht darin, daß der Datenträger nur mit einem dazu gehörenden weiteren Datenträger ausgegeben wird, der ebenfalls mit dem ersten Terminal verbindbar ist. Der Datenträger besteht dann gleichsam aus zwei Teilen, in denen die gleichen geheimen Codes oder in vorgegebener Beziehung zueinander stehende geheime Codes gespeichert sind. Die erstmalige Verbindung des weiteren Datenträgers mit dem ersten Terminal löst die Übertragung und Speicherung des geheimen Codes im Terminal aus. Auch kann der weitere Datenträger mit dem ersten Terminal zu einer Funktionseinheit zusammengeführt bzw. in diese integriert werden. Erst danach kann der den Geldbetrag enthaltende Datenträger mit dem ersten Terminal zusammen verwendet werden. Damit die eindeutige Zuordnung von Datenträger und erstem Terminal irreversibel ist, darf die Übertragung und Speicherung eines geheimen Codes aber nur einmalig möglich sein und muß wenigstens in dem Datenträger gegen Wiederholung gesperrt sein, da sonst die Sicherheit gegen Betrug bei Verlust oder Diebstahl des Datenträgers nicht mehr vorhanden wäre. Lediglich fiir den Fall, daß z. B. ein bereits zugeordnetes Terminal verloren geht und ein anderes erstes Terminal zugeordnet werden soll, kann vorgesehen werden, daß ein besonderer Code, der dem Benutzer bekannt und der im Datenträger gespeichert ist und beispielsweise mit seiner persönlichen Geheimzahl PIN übereinstimmt, eingegeben und in dem Datenträger auf Richtigkeit geprüft wird und dann die Abgabe des geheimen Codes vom Datenträger zu dem anderen Terminal auslöst. Zur Erhöhung der Sicherheit wird die Anzahl Male, die dieser Vorgang ausgelöst wird, auf einen kleinen Wert begrenzt, indem beim Überschreiten der Anzahl Male, die der Datenträger mit einem anderen ersten Terminal verbunden wird, kein Code mehr vom Datenträger zum Terminal abgegeben wird.

Es kann grundsätzlich vorgesehen werden, daß der bei dem erfindungsgemäßen Verfahren verwendete Datenträger so aufgebaut ist, daß vor der erstmaligen Verbindung des Datenträgers mit einem ersten Terminal der weitere Speicher mit dem internen Speicher gekoppelt ist, so daß dann der interne Speicher direkt zugänglich ist. Dabei wäre der im internen Speicher enthaltene Geldbetrag nicht geschützt, es sei denn, daß der Zugang nur nach Eingabe einer Geheimzahl gestattet wird. In jedem Fall verhält sich der Datenträger für ein beliebiges zweites Terminal immer in gleicher Weise wie ein gebräuchlicher Datenträger.

Die Eingabe eines Geldbetrages, der vom internen Speicher in den weiteren Speicher übertragen werden soll, kann so erfolgen, daß im Datenträger ein Eingabespeicher vorgesehen wird, in den der gewünschte Geldbetrag zunächst eingegeben wird. Erst auf ein Bestätigungssignal des ersten Terminals wird dieser Geldbetrag bzw. werden die entsprechenden Daten vom internen Speicher in den weiteren Speicher übertragen. Wenn der Geldbetrag über das erste Terminal eingegeben wurde, kann der Datenträger vor Eingabe des Bestätigungssignals vom ersten Terminal zwischenzeitlich getrennt werden. Dadurch kann die Eingabe des Geldbetrags in einer ruhigen Phase erfolgen, während für das Bestätigungssignal nur eine sehr einfache Betätigung des ersten Terminals notwendig ist und der in dem Eingabespeicher eingegebene Geldbetrag dennoch gegen mißbräuchliches Abbuchen bis zu dem Bestätigungssignal geschützt ist.

Noch günstiger ist die Verwendung eines Eingabespeichers, wenn in diesen die Angabe eines Geldbetrages durch ein zweites Terminal eingegeben werden kann. Der Kunde, der beispielsweise eine Ware kaufen will, bringt seinen Datenträger mit dem Terminal des Verkäufers in Wirkverbindung, entweder über Kontakte oder noch zweckmäßiger kontaktlos über ein elektrisches bzw. elektromagnetisches Feld, und der von dem Terminal des Verkäufers angezeigte Geldbetrag wird in den Eingabespeicher des Datenträgers eingeschrieben. Dieser Eingabevorgang kann z.B. durch ein entsprechendes Signal oder auch automatisch dadurch vom Terminal des Verkäufers ausgelöst werden, daß dieses erkennt, daß der weitere Speicher leer oder zumindest nicht genügend gefüllt ist. Der Käufer, d.h. der Benutzer des Datenträgers bringt diesen nun mit seinem Terminal in Verbindung und liest auf dessen Anzeigeeinheit den vom Verkäufer übertragenen Geldbetrag ab. Wenn der Käufer mit diesem Geldbetrag einverstanden ist, gibt er das Bestätigungssignal ein, und nun erst wird dieser Geldbetrag vom internen Speicher in den weiteren Speicher übertragen, und nur dieser Geldbetrag kann dann anschließend vom Terminal des Verkäufers abgebucht werden, vorzugsweise durch eine Verbindung des Datenträgers mit dem Terminal über Kontakte. Die hierbei ablaufenden Vorgänge sind sehr einfach und schnell, zumindest ebenso schnell wie eine Bezahlung mit Bargeld, und der Kunde hat die Gewißheit, wieviel Geld tatsächlich von ihm zum Verkäufer übertragen wird, wobei der ganze Bezahlungsvorgang völlig anonym bleibt.

Anstatt den Datenträger über Kontakte mit dem Terminal des Verkäufers in Verbindung zu bringen, ist es auch möglich, daß der Datenträger kontaktlos den in den weiteren Speicher übertragenen Geldbetrag aktiv zum Terminal des Verkäufers überträgt. Da der Datenträger selbst keine eigene Energiequelle aufweist und das vom Terminal des Verkäufers ausgestrahlte Feld in den meisten Fällen nicht ausreichen dürfte, den Datenträger mit genügender Energie zum aktiven Aussenden zu versorgen, kann der Datenträger in seiner Verbindung mit dem ersten Terminal, das eine eigene Energiequelle aufweist, in die Nähe des Terminals des Verkäufers gebracht werden, und z. B. durch Eingabe eines weiteren Bestätigungssignals durch den Benutzer wird der im weiteren Speicher enthaltene Geldbetrag zum Terminal des Verkäufers übertragen. Dabei hat der Käufer, d. h. der Benutzer des Datenträgers vollständige Kontrolle nicht nur über die Höhe des Geldbetrages, sondern auch über den Zeitpunkt von dessen Übertragung.

Unter bestimmten Bedingungen kann der Bezahlungsvorgang noch weiter vereinfacht werden, insbesondere wenn das Terminal des Verkäufers ein Automat ist, beispielsweise ein Zigarettenautomat. In diesem Fall kann das Terminal, d.h. der Automat, so eingerichtet sein, ein Identifizierungssignal abzugeben, wenn ein Datenträger eingeführt bzw. in entsprechende Nähe gebracht wird. Das Identifizierungssignal kennzeichnet dabei die Art bzw. den Typ des Automaten, beispielsweise Zigarettenautomat oder Kaffeeautomat, wodurch gleichzeitig ein bestimmter fester Geldbetrag für die Ware des Automaten definiert wird. Der Datenträger überträgt dann diesen Geldbetrag in den weiteren Speicher, ohne daß in diesem Sonderfall der Kunde sein Terminal benutzen und ein Bestätigungssignal eingeben muß. Danach wird dieser Geldbetrag automatisch von dem weiteren Speicher durch den Automaten abgebucht. Der auf diese Weise vom Automaten übertragbare Geldbetrag kann innerhalb des Datenträgers auf einen kleinen Wert begrenzt werden, so daß der Schaden fiir den Kunden klein bleibt, falls durch eine Fehlfunktion oder durch betrügerische Manipulation am Automaten ein falsches Identifizierungssignal abgegeben und dadurch ein höherer Geldbetrag vom Datenträger abgebucht wird, als der vom Automaten abgegebenen Ware entspricht.

Es gibt eine kleine Anzahl von Leistungsanbietern, deren Leistungen von vielen Benutzern häufig in Anspruch genommen werden. Dies sind insbesondere Telefondienste, öffentliche Nahverkehrsmittel, gebührenpflichtige Parkplätze und ähnliche Leistungen. Bei derartigen Leistungsanbietern ist die Gefahr, daß irrtümlich oder gar in betrügerischer Absicht zu hohe Geldbeträge abgebucht werden, äußerst gering. Ferner wird von solchen Leistungsanbietern häufig nicht gewünscht, daß jedes diesem Leistungsanbieter zugeordnete Terminal mit einem Speicher versehen ist, auf dem die elektronisch übertragenen Geldbeträge gesammelt werden. Nach einer Ausgestaltung der Erfindung werden daher mehrere weitere Speicherabschnitte bzw. weitere Speicher vorgesehen, in die größere Beträge als fiir eine einmalige Beanspruchung einer bestimmten Leistung erforderlich eingeschrieben werden, wobei jeder weitere Speicher einem bestimmten Leistungsanbieter zugeordnet wird. Wenn eine Leistung in Anspruch genommen wird, wird durch das Terminal des Leistungsanbieters automatisch in dem zugehörigen weiteren Speicher der darin enthaltene Geldbetrag um einen entsprechenden Betrag verringert, ohne daß Daten, die diesen Betrag darstellen, von dem Datenträger zum Terminal übertragen werden. Damit der betreffende Leistungsanbieter aber dennoch einen Geldbetrag gutgeschrieben bekommt, wird bei der Übertragung eines größeren Geldbetrages aus dem internen Speicher in einen bestimmten weiteren Speicher im Datenträger ein Datensatz erzeugt und in einem dritten Speicherabschnitt gespeichert, der spätestens dann ausgelesen wird, wenn erneut Geldbeträge von dem Konto des Benutzers in den internen Speicher des Datenträgers übertragen werden.

Noch günstiger wird die Verwendung mehrerer weiterer Speicher für bestimmte Leistungsanbieter, wenn in diesen weiteren Speichern die Geldbeträge in Form von Werteinheiten gespeichert sind. Wenn eine Leistung eines solchen Leistungsanbieters in Anspruch genommen wird, wird in dem entsprechenden weiteren Speicher lediglich eine Werteinheit oder eine entsprechende Anzahl Werteinheiten ungültig gemacht. Hierfür ist noch weniger Aufwand erforderlich als bei der Verringerung eines gespeicherten Geldbetrags um einen bestimmten, der in Anspruch genommenen Leistung entsprechenden Betrag.

Insbesondere im Fall der Benutzung von öffentlichen Nahverkehrsmitteln werden vom zugeordneten Automaten für die subtrahierten Beträge bzw. die ungültig gemachten Werteinheiten Fahrscheine ausgegeben. Diese gesonderten Fahrscheine können vermieden werden, wenn zusätzliche weitere Speicher im Datenträger vorgesehen werden, in die die subtrahierten Beträge oder die ungültig gemachten Werteinheiten übertragen werden, vorzugsweise durch den Automaten des Nahverkehrsunternehmen. Außerdem wird durch diesen Automaten oder beim Passieren einer Sperre am Zugang des Verkehrsmittels eine Zeitangabe und eine Angabe über den Zugangsort in den betreffenden zusätzlichen weiteren Speicher eingeschrieben. Dadurch dient der Datenträger selbst als Fahrtausweis, da der zusätzliche weitere Speicher alle notwendigen Angaben eines Fahrtausweises enthält und während der Fahrt jederzeit geprüft werden kann. Bei Verkehrsunternehmen, die am Ausgang des Fahrtzielortes den Fahrtausweis prüfen, kann dann der Inhalt des zusätzlichen weiteren Speichers gelöscht werden. Wenn am Ausgang keine Kontrolle vorgesehen ist, wird der Inhalt des als Fahrtausweis dienenden Speichers automatisch durch Zeitablauf ungültig, ohne daß er gelöscht werden muß, und bei der nächsten Benutzung des öffentlichen Verkehrsmittels wird der zugehörige zusätzliche weitere Speicher einfach überschrieben.

Der Datenträger kann von der das Konto des Benutzers führenden Bank so ausgegeben werden, daß der interne Speicher des Datenträgers, der nicht von außen zugänglich ist, mit einem bestimmten, größeren Geldbetrag gefüllt ist, und wenn dieser Geldbetrag verbraucht ist, wird der Datenträger an die Hausbank zurückgegeben. Wesentlich günstiger ist es jedoch, wenn der interne Speicher des Datenträgers von dem Benutzer wiederholt mit einem Geldbetrag aufgefüllt werden kann. Dazu wird der Datenträger von dem Benutzer mit einem dritten Terminal in Verbindung gebracht, das beispielsweise in den Räumen der Hausbank angebracht ist, und beim Übertragen eines Geldbetrags werden entsprechende Daten in den Rechner der Hausbank automatisch übertragen und der in den Datenträger übertragene Geldbetrag von dem Konto des Benutzer abgebucht. Gleichzeitig wird automatisch, d.h. ohne Mitwirkung des Benutzers, der Inhalt des dritten Speicherabschnitts ausgelesen und in den Rechner übertragen. Diese ausgelesenen Daten des dritten Speicherabschnitts bewirken, daß der Geldbetrag, der in den einem bestimmten Leistungsanbieter zugeordneten weiteren Speicher durch den Benutzer übertragen worden ist, nun auch diesem Leistungsanbieter gutgeschrieben wird. Dieses dritte Terminal zum Auffüllen des Speichers des Datenträgers muß nicht nur in den Räumen der Hausbank angeordnet sein, sondern es ist auch denkbar, daß dies über einen öffentlichen oder privaten Telefonanschluß erfolgen kann, der in bekannter Weise mit einer Chipkarte benutzt werden kann. Durch entsprechende Bedienung eines solchen Kartentelefons können dann alle bei dem Auffüllen des Datenträgers anfallende Daten, wie Höhe des Geldbetrages, Bezeichnung der Hausbank des Benutzers und dessen Kontonummer, über einen Rechner der Telefongesellschaft oder direkt zu der Hausbank übertragen werden. Dadurch ist der Benutzer weitgehend unabhängig von der Lage seiner Hausbank und deren Zweigstellen, da ein Kartentelefon in den meisten Fällen dem Aufenthaltsort des Benutzers näher sein dürfte.

Die Übertragung eines Geldbetrags aus dem internen Speicher des Datenträgers, der beispielsweise auf die vorstehend beschriebene Weise gefüllt ist, in einen weiteren Speicher, der einem bestimmten Leistungsanbieter zugeordnet ist, kann nach einer weiteren Ausgestaltung des erfindungsgemäßen Verfahrens nicht nur durch das erste Terminal, sondern auch durch das dritte Terminal, d.h. vorzugsweise durch ein Kartentelefon mittels entsprechender Bedienung durchgeführt werden. Dabei brauchen dann keine Daten, die diese Übertragung angeben, in den dritten Speicherabschnitt des Datenträgers übertragen und zwischengespeichert zu werden, sondern diese Daten können gleich über das dritte Terminal z.B. direkt zu dem Rechner des Leistungsanbieters, dem der betreffende weitere Speicher zugeordnet ist, übertragen werden. Insbesondere ist die Verwendung des dritten Terminals notwendig, wenn ein weiterer Speicher erstmals einem Leistungsanbieter bzw. einem anderen als dem bisher zugeordneten Leistungsanbieter zugeordnet werden soll.

Es kann vorkommen, daß die Leistungen eines Leistungsanbieters, dem ein bestimmter weiterer Speicher zugeordnet ist, fiir zumindest längere Zeit nicht in Anspruch genommen werden sollen. Dies ist z.B. der Fall, wenn der Leistungsanbieter der öffentliche Nahverkehr einer Stadt ist und der Benutzer sich für längere Zeit in einer anderen Stadt aufhält. Wenn in dem weiteren Speicher, der diesem Leistungsanbieter zugeordnet ist, noch Geldbeträge bzw. Werteinheiten gespeichert sind, würden diese dem Benutzer derzeit nicht zur Verfügung stehen. Um derartige Geldbeträge dennoch verwenden zu können, ist es nach einer weiteren Ausgestaltung des erfindungsgemäßen Verfahrens vorgesehen, daß die in einem solchen weiteren Speicher gespeicherten Geldbeträge bzw. Werteinheiten wieder in den internen Speicher zurückübertragen werden können. Dies kann mit Hilfe eines dritten Terminals, also vorzugsweise mit Hilfe eines Kartentelefons geschehen, wobei entsprechende Daten über dieses Terminal weitergeleitet werden müssen, damit dem Leistungsanbieter, dem der betreffende weitere Speicher zugeordnet ist, aus dem Geldbeträge zurückübertragen werden sollen, dieser Geldbetrag wieder abgebucht wird. Dies ist notwendig, da ihm im allgemeinen der gesamte Betrag, der vorher einmal in diesen zugeordneten weiteren Speicher übertragen worden ist, bereits gutgeschrieben worden ist. Wenn das Zurückübertragen aus einem solchen weiteren Speicher in den internen Speicher mittels des ersten Terminals des Benutzers selbst erfolgt, müssen entsprechende, diesen Vorgang kennzeichnende Daten in den dritten Speicherabschnitt übertragen werden, damit das Zurückbuchen des Betrages, der innerhalb des Datenträgers von einem weiteren Speicher in den internen Speicher zurückübertragen wird, von dem Konto des zugeordneten Leistungsanbieters durchgeführt werden kann, wenn der Datenträgers das nächste Mal mit einem dritten Terminal in Verbindung gebracht wird.

Wenn aus einem weiteren Speicher ein Geldbetrag in den internen Speicher zurückübertragen worden ist, kann dieser Geldbetrag wieder in einen weiteren Speicher, der einem anderen Leistungsanbieter zugeordnet ist, übertragen werden.

Die einzelnen weiteren Speicher oder zumindest ein Teil davon können bestimmten Leistungsanbietern fest zugeordnet sein, beispielsweise ist ein weiterer Speicher für Telefon-Werteinheiten vorgesehen, ein anderer weiterer Speicher fiir Parkgebühren und ein dritter weiterer Speicher für Betreiber des öffentlichen Personen-Nahverkehrs. Auch können weitere Speicher vorgesehen werden, die wahlweise bestimmten Leistungsanbietern zugeordnet werden können, beispielsweise über bestimmte, den Leistungsanbietern zugeordnete Kennzahlen, die vom Benutzer gewählt werden können. Bei fest zugeordneten weiteren Speichern ist jedoch die Benutzung, d.h. die Abbuchung von insbesondere Werteinheiten, wesentlich einfacher. Es gibt fiir bestimmte Leistungen, beispielsweise fiir den öffentlichen Nahverkehr oder fiir Parkgebühren, verschiedene Leistungsanbieter derselben Art von Leistungen, die getrennt voneinander abrechnen, beispielsweise der öffentliche Nahverkehr in verschiedenen Städten bzw. Regionen. Bei der festen Zuordnung von zumindest einem Teil der weiteren Speicher zu bestimmten Leistungsanbietern ist es zweckmäßig, daß diese Zuordnung sich auf bestimmte Arten von Leistungen beziehen, d.h. ein bestimmter weiterer Speicher ist z.B. immer dem öffentlichen Nahverkehr zugeordnet. Um jedoch zwischen den unterschiedlichen Leistungsanbietern der gleichen Art von Leistungen unterscheiden zu können, werden die Geldbeträge bzw. Werteinheiten des betreffenden weiteren Speichers mit einer Kennzeichnung versehen, die angibt, welcher bestimmte Leistungsanbieter, d.h. in Beispiel des öffentlichen Nahverkehrs, welche Stadt bzw. Region den im betreffenden weiteren Speicher enthaltenen Werteinheiten zugeordnet ist. Diese Kennzeichnung kann beispielsweise die Postleitzahl oder die Telefon-Vorwahlnummer dieser Stadt bzw. Region oder ein Teil dieser Zahlen sein. Um einen solchen bestimmten Leistungsanbieter auszuwählen, wird der Datenträger mit einem dritten Terminal, d.h. vorzugsweise mit einem Kartentelefon, verbunden, und durch entsprechende Bedienung wird ein wählbarer Geldbetrag zusammen mit der dem bestimmten Leistungsanbieter zugeordneten Kennzeichnung in den betreffenden weiteren Speicher übertragen. Gleichzeitig werden entsprechende Daten über das Kartentelefon in einen Rechner übertragen, wodurch dieser ausgewählte Leistungsanbieter eine Gutschrift über den Geldbetrag, den die in den weiteren Speicher eingeschriebenen Werteinheiten darstellen, erhält.

Die Kennzeichnung muß nicht durch den Benutzer eingegeben werden, wenn angenommen wird, daß eine spezielle Kennzeichnung für einen bestimmten Verkäufer auf der Region basiert, in der der Verkäufer aktiv ist und in der die Verbindung hergestellt wird. Wenn ein weiterer Speicher fiir diesen Leistungsanbieter bereits vorhanden ist, wird ein Geldbetrag oder eine Anzahl Werteinheiten in diesen weiteren Speicher übertragen. Wenn kein derartiger Speicher vorhanden ist, wird ein neuer weiterer Speicher fiir diesen Leistungsanbieter eingerichtet und die entsprechende Kennzeichnung darin eingeschrieben. Der Geldbetrag bzw. die Anzahl Werteinheiten wird dann in dem neu eingerichteten weiteren Speicher gespeichert. Wenn der Benutzer einen bestimmten Leistungsanbieter in einer entfernten Region auswählen möchte, gibt er über das dritte Terminal die Kennzeichnung für diesen ausgewählten Leistungsanbieter ein und danach den Geldbetrag oder die Anzahl Werteinheiten, der bzw. die in dem entsprechenden neu eingerichteten weiteren Speicher gespeichert wird, während der Betrag dem ausgewählten Leistungsanbieter in der entfernten Region gutgeschrieben wird.

Wenn ein Leistungsanbieter oder eine Art von Leistungen nur selten oder nur einmalig benutzt wird und nach der letzten Benutzung noch Werteinheiten darin zurückbleiben, könnte der Benutzer vergessen, daß diese Werteinheiten noch vorhanden sind, ohne daß er darüber unmittelbar verfügen kann. Daher werden den Werteinheiten bzw. Geldbeträgen zumindest einiger der weiteren Speicher weitere Kennzeichnungen zugeordnet, die ein Datum darstellen. Dieses Datum wird bei jeder Verbindung des Datenträgers mit einem dritten Terminal mit dem aktuellen Datum verglichen, und wenn diese Differenz einen vorgegebenen Wert überschreitet, kann davon ausgegangen werden, daß der Benutzer die zugehörige Leistung auch in Zukunft zumindest vorläufig nicht mehr benutzen wird, und die in diesem weiteren Speicher enthaltenen Geldbeträge bzw. Werteinheiten werden automatisch als Geldbeträge in den internen Speicher zurück übertragen. Auch in diesem Falle werden wieder entsprechende Daten von dem dritten Terminal an einen Rechner übertragen, wodurch diese Werteinheiten bzw. Geldbeträge, die ja einem bestimmten Leistungsanbieter bereits gutgeschrieben waren, von diesen wieder zurückgebucht werden.

Die Erfindung betrifft ferner ein System zum Durchführen des erfindungsgemäßen Verfahrens mit wenigstens einem tragbaren Datenträger und mehreren Terminals, die je Steuereinheiten zur Datenverarbeitung enthalten, die zum Durchführen des erfindungsgemäßen Verfahrens eingerichtet sind.

Ferner betrifft die Erfindung auch einen tragbaren Datenträger mit einem Speicher und einer Steuereinheit, die zur Durchführung des erfindungsgemäßen Verfahrens geeignet ist.

Ausführungsbeispiele der Erfindung werden nachstehend anhand der Zeichnung näher erläutert. Darin zeigt:
Fig. 1 schematisch die Verbindung eines tragbaren Datenträgers mit einem Terminal zum Übertragen eines Geldbetrages in den Datenträger,
Fig. 2 schematisch die Übertragung von Geldbeträgen bzw. Werteinheiten innerhalb des Datenträgers in verschiedene Speicherabschnitte,
Fig. 3 schematisch das Löschen von Werteinheiten in einem der Speicherabschnitte durch ein Terminal eines Leistungsanbieters,
Fig. 4 schematisch die Verbindung eines Datenträgers mit einem Terminal, das mit einem Rechner verbunden ist, zum Übertragen von Werteinheiten bzw. Geldbeträgen in einen Speicherabschnitt,
Fig. 5 schematisch die Verbindung eines Datenträgers mit einem Terminal zum Rückübertragen von Werteinheiten aus einem Speicherabschnitt in den internen Geldspeicher,
Fig. 6 schematisch zwei Speicherabschnitte, in denen teilweise entwertete Werteinheiten enthalten sind und die mit einer Kennzeichnung versehen sind,
Fig. 7 eine perspektivische Ansicht einer Ausführungsform eines persönlichen Terminals mit einem Datenträger,
Fig. 8 schematisch eine weitere Ausgestaltung der Erfindung.

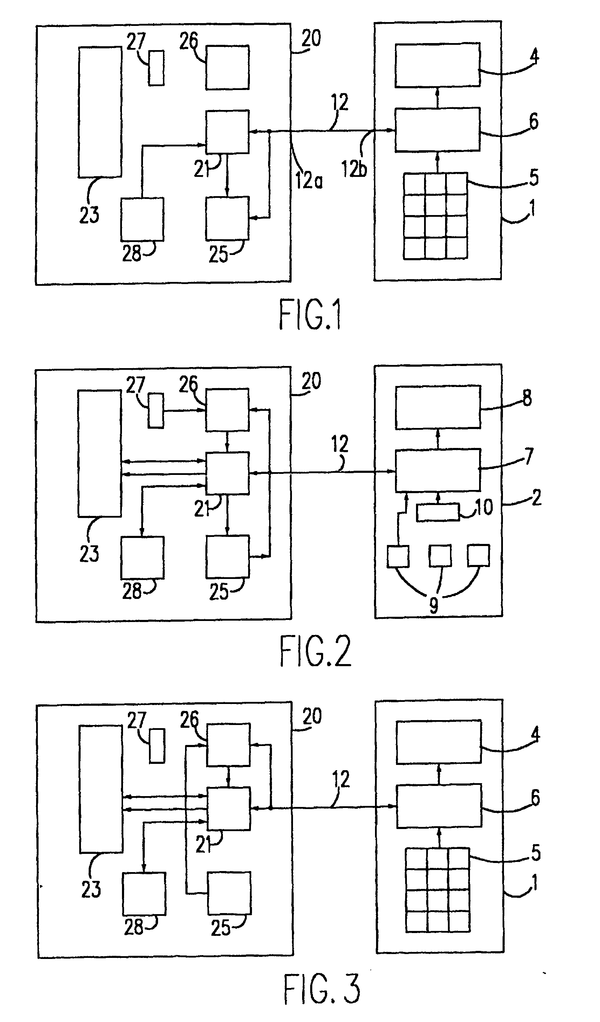

In Fig. 1 ist schematisch ein tragbarer Datenträger 20 angedeutet, der eine Anzahl Speicher bzw. Speicherabschnitte 23 und 25 bis 28 sowie eine Steuereinheit 21 enthält. Die Elemente des Datenträgers 20 sind nach außen über eine Schnittstelle 29 verbunden, die hier der Übersichtlichkeit halber mit mehreren Leitungen dargestellt ist. Über eine Leitung 11 können mit dem Speicher 23 Daten ausgetauscht werden, die vorzugsweise Geldbeträge darstellen. Über eine Leitung 12 werden der Steuereinheit 21 Steuerbefehle zugeführt, und über eine Leitung 16 kann der Inhalt des Speichers 28 ausgelesen werden. Die einzelnen Speicher stellen vorzugsweise Speicherabschnitte wenigstens eines einheitlichen Speichers dar. Die Leitungen 11, 12 und 16 der Schnittstelle 29 sowie weitere, nicht dargestellte Leitungen, insbesondere für die Spannungsversorgung, brauchen tatsächlich nicht als getrennte Leitungen vorhanden zu sein, sondern mehrere Leitungen können zu einer Multiplexleitung zusammengefaßt sein, wenn von einem Datenträger mit mehreren elektrischen Kontakten ausgegangen wird. Bei einem Datenträger für kontaktlose Informations- und Energieübertragung werden alle Leitungen vorzugsweise durch eine induktive oder kapazitive Kopplung realisiert.

Der Datenträger 20 ist in Fig. 1 mit einem schematisch angedeuteten Terminal 3 verbunden, das beispielsweise durch ein Kartentelefon realisiert ist und über eine Verbindung 18 mit einem Rechner 19 verbunden ist, der auch durch eine allgemeine Datenverarbeitungsanordnung oder auch durch eine Buchungseinrichtung realisiert sein kann. Diese Verbindung wird durch den Benutzer vorübergehend hergestellt. Das Terminal 3 enthält im wesentlichen eine Anzeigeeinheit 4, eine Tastatur 5 und eine Steuereinheit 6. Bei einer bestimmten Bedienung der Tastatur 5 wird die Steuereinheit 6 veranlaßt, über die Verbindung 12 Steuerbefehle zur Steuereinheit 21 des Datenträgers 20 zu übertragen, worauf diese über die Verbindung 22 den Speicher 23 ansteuert, um über die Leitung 11 übertragene, Geldbeträge darstellende Daten auszutauschen.

Außerdem wird der Speicher 28 angesteuert, um seinen Inhalt über die Leitung 16 an das Terminal 3 zu übertragen. Der Geldbetrag bzw. die entsprechenden Daten, die in den Speicher 23 eingeschrieben werden, werden mittels Eingabe über die Tastatur 5 durch einen Benutzer bestimmt und von der Steuereinheit 6 des Terminals 3 auf die Leitung 11 gegeben. Die Anzeigeeinheit 4 dient zum Anzeigen der eingegebenen Daten bzw. zur Anzeige von Angaben, aus denen der Benutzer die jeweils folgende erforderliche Bedienung erkennen kann. Die über die Leitung 16 vom Datenträger zum Terminal 3 übertragenen Daten werden von der Steuereinheit 6 verarbeitet, und daraus abgeleitete Daten sowie aus der Übertragung in den Speicher 23 gebildete Daten werden über die Leitung 18 dem Rechner 19 zugeführt. Diese dem Rechner 19 zugeführten Daten bewirken, daß von dem Konto des Inhabers des Datenträgers 20 der entsprechende Geldbetrag, der dem Datenträger 20 zugeführt worden ist, abgebucht wird und daß außerdem die aus dem Speicher 28 ausgelesenen Daten verarbeitet werden. Die Bedeutung dieser Daten wird später erläutert.

In Fig. 2 ist der Datenträger 20 mit einem Terminal 1 gekoppelt, das ebenfalls eine Anzeigeeinheit 8 sowie einige Tasten 9, aber nur eine sehr einfache Steuereinheit 7 enthält. Dieses Terminal 1 kann daher sehr klein ausgeführt sein, insbesondere braucht es nur einen Bruchteil der Fläche des Datenträgers 20 groß zu sein, und zwar gerade so groß, daß die Kontakte bzw. die induktive Koppelanordnung des Datenträgers aufgenommen werden kann. Dieses Terminal kann dem Benutzer fest zugeordnet sein. Das Terminal 1 ist mit einer eigenen Spannungsversorgung in Form einer kleinen Batterie ausgerüstet. Bei entsprechender Betätigung der Tasten 9 wird über die Verbindung 12 der Schnittstelle 29 die Steuereinheit 21 in dem Datenträger 20 angesteuert, um die Übertragung eines z.B. durch den Inhalt eines Eingabespeichers 21b bestimmten Geldbetrags aus dem Speicher 23 in einen wählbaren Speicherabschnitt 25, 26 oder 27 zu bewirken. In den Eingabespeicher 21b kann die Angabe für einen über die Tasten 9 des Terminals 1 wählbaren Geldbetrag über die hier getrennt dargestellte Verbindung 12a übertragen werden. Ferner wird der über die Tasten 9 gewählte Geldbetrag direkt oder nach der Übertragung in den Eingabespeicher 21b durch Rückübertragung über die Verbindung 12a als Inhalt des Eingabespeichers auf der Anzeigeeinheit 8 angezeigt.

Vor der Übertragung des gewählten Geldbetrags zum Datenträger 20 kann zunächst eine Geheimzahl aus einem Speicher 7a im Terminal 1 zum Datenträger 20 übertragen und einem Vergleicher 21a zugeführt werden, der einen Speicher enthält, in dem ebenfalls eine Geheimzahl gespeichert sein kann. Die Geheimzahl kann zusätzlich auch von den Steuereinheiten 7 bzw. 21 ver- bzw. entschlüsselt werden. Unter bestimmten Bedingungen, insbesondere beim erstmaligen Verbinden des Datenträgers 20 mit dem Terminal 1 wird die Geheimzahl von letzterem in den Datenträger übertragen und direkt oder als daraus abgeleitete Geheimzahl darin gespeichert. Der Vergleicher 21a prüft dann bei einer später wiederholten Verbindung, ob die beiden Geheimzahlen in einer vorgegebenen Beziehung zueinander stehen, vorzugsweise, ob sie gleich sind. Erst wenn dies der Fall ist, würde die Steuereinheit freigegeben, um eine nachfolgend vom Terminal 1 vorzugsweise in den Eingabespeicher 21b des Datenträgers 20 übertragene Angabe eines Geldbetrags zu verarbeiten, indem dieser Geldbetrag vom Speicher 23 zu einem gewählten Speicherabschnitt 25, 26 oder 27 übertragen wird.

Dies erfolgt innerhalb des Datenträgers 20 über die schematisch dargestellte Steuerverbindung 22, die zum Speicher 23 und zu den Speicherabschnitten 25 bis 27 führt und einen davon auswählt. Durch die Ansteuerung des Speichers 23 werden dem gewünschten Geldbetrag entsprechende Daten über die Leitung 24 dem ausgewählten Speicherabschitten 25 bis 27 zugeführt und in einigen dieser Speicherabschnitte vorzugsweise in Form von Werteinheiten übertragen. Gleichzeitig wird über die Steuerverbindung 22 ein Speicher 28 angesteuert, und diesem werden ebenfalls die aus dem Speicher 23 abgegebenen Daten entsprechend dem übertragenen Geldbetrag zugeführt und darin eingeschrieben. Dies ist allerdings lediglich der Fall, wenn der ausgewählte Speicherabschnitt einem Leistungsanbieter fest zugeordnet ist. Wenn eine Leistung dieses Leistungsanbieters in Anspruch genommen wird, wird lediglich ein entsprechender Geldbetrag von dem betreffenden Speicherabschnitt subtrahiert oder eine entsprechende Anzahl Werteinheiten in dem Speicherabschnitt ungültig gemacht. Entsprechende Daten in dem Speicherabschnitt werden verändert, jedoch wird weder der Geldbetrag noch werden die Werteinheiten tatsächlich auf einen Speicher des Leistungsanbieters übertragen. Damit der Leistungsanbieter aber dennoch den Geldbetrag, der in den zugeordneten Speicherabschnitt übertragen worden ist, gutgeschrieben erhält, wird dieser Betrag also in dem Speicher 28 zwischengespeichert und bei dem nächsten Mal, wenn der Datenträger mit vorzugsweise einem Kartentelefon in Verbindung gebracht wird, über die Leitung 16 ausgelesen, wie anhand der Fig. 1 erläutert wurde. Wenn dagegen der Geldbetrag in einen Speicherabschnitt übertragen wird, aus dem ein Leistungsanbieter direkt einen Geldbetrag in seinen eigenen Speicher überträgt, ist die Zwischenspeicherung beim Übertragen eines Geldbetrages vom Speicher 23 in diesen Speicherabschnitt nicht erforderlich.

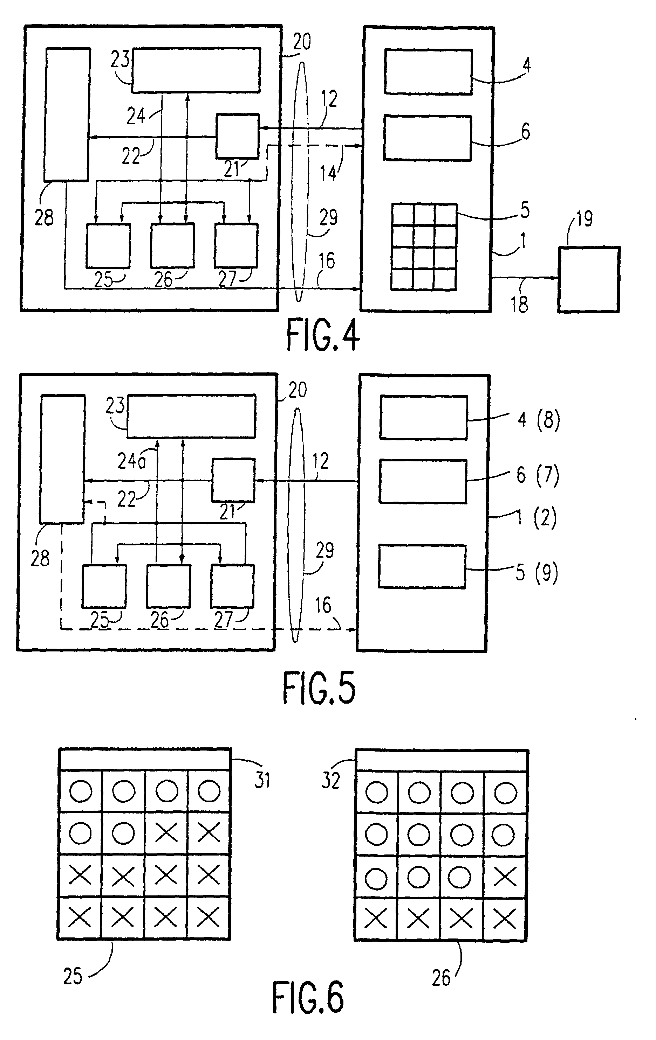

Bezugnehmend auf Fig. 4 besteht eine weitere Funktion gemäß der Erfindung in der Verwendung des ersten Terminals, um einen gewählten Geldbetrag oder eine gewählte Anzahl von Werteinheiten von dem zweiten Speicher 23 in einen der weiteren Speicher 25, 26 oder 27 für einen bestimmten Leistungsanbieter zu übertragen. Gleichzeitig werden im dritten Speicher 28 Daten entsprechend dem Geldbetrag bzw. der Anzahl Werteinheiten gespeichert, die in den weiteren Speicher übertragen worden sind. Bevor dieser Geldbetrag bzw. diese Werteinheiten benutzt werden können, muß der Benutzer den Datenträger 20 mit einem dritten Terminal verbinden, z.B. mit einem in Fig. 4 dargestellten Kartentelefon, wo durch geeignete Verarbeitungsvorgänge die Daten vom dritten Speicher 28 entsprechend dem Geldbetrag oder der Werteinheiten in dem Speicherabschnitt des Leistungsanbieters über das dritte Terminal 3 zum zentralen Rechner übertragen und dem Leistungsanbieter gutgeschrieben werden. Ein Signal entweder vom dritten Terminal oder vom Rechner oder von der Steuereinheit des Datenträgers macht den in den Speicherabschnitt übertragenen Geldbetrag bzw. die Werteinheiten gültig und erlaubt deren Verwendung, wenn der Datenträger danach mit einem Terminal des betreffenden Leistungsanbieters in Verbindung gebracht wird.

Die Steuereinheit 21 muß also eine Folge von Funktionen und bei verschiedenen Anwendungen wie dem Anschluß an das Terminal 3 in Fig. 1 verschiedene Folgen von Funktionen steuern, so daß die Steuereinheit 21 zweckmäßig als programmgesteuerter Mikroprozessor mit zugehörigem Programmspeicher ausgeführt ist. Dieser enthält eine Anzahl Unterprogramme, die den verschiedenen Folgen von Funktionen zugeordnet sind. Durch die von einem Terminal übertragenen Steuerbefehle werden dann fest zugeordnete Unterprogramme aufgerufen, so daß die Steuerbefehle sehr einfach sein können, und entsprechend einfach braucht dann auch insbesondere das Terminal 1 aufgebaut zu sein, so daß die Betätigung einer bestimmten Taste nahezu unmittelbar nur einem bestimmten Steuerbefehl zugeordnet ist. Der Funktionsablauf, der durch die Betätigung einer bestimmten Taste ausgelöst wird, wird also ausschließlich durch das Programm im Datenträger bestimmt. Dadurch ist es möglich, unterschiedliche Datenträger, die beispielsweise unterschiedlichen Leistungsanbietern oder Gruppen von Leistungsanbietern zugeordnet sind, mit dem gleichen Terminal zu betreiben, wobei die Betätigung derselben Taste in unterschiedlichen Datenträgern unterschiedliche Funktionen auslösen kann. Dabei ist es günstig, wenn die Anzeige 8 des Terminals 1 von dem gerade damit verbundenen Datenträger gesteuert wird, so daß der Benutzer aus der angezeigten Information erkennt, welche Art von Datenträger er gerade benutzt. Insbesondere ist es dann auch leicht möglich, derselben Taste des Terminals nacheinander verschiedene Funktionen zuzuordnen, beispielsweise zu Beginn nach dem Verbinden mit einem Datenträger durch eine Taste einen bestimmten Leistungsanbieter auszuwählen, nach dieser Auswahl durch dieselbe Taste einen Geldbetrag einzugeben usw., indem diese Zuordnung der Taste auf der Anzeige angegeben wird, was durch einen entsprechenden mechanischen Aufbau des Terminals leicht möglich ist, wie später noch weiter erläutert wird.

In Fig. 3 ist der Fall schematisch angedeutet, daß der Benutzer eine Leistung in Anspruch nehmen will und den Datenträger 20 mit einem Terminal 2 des Leistungsanbieters in Verbindung bringt. Dieses Terminal 2 ist lediglich ganz schematisch mit nur einer Verarbeitungseinheit 10 dargestellt, weitere Elemente, wie ggf. Anzeigeeinheit und Tastatur sind der Übersichtlichkeit halber weggelassen. Wenn das Terminal 2 zu einem Leistungsanbieter gehört, dem ein Speicherabschnitt fest zugeordnet ist, beispielsweise ein Nahverkehrsbetrieb, überträgt das Terminal 2 lediglich Steuersignale über die Leitung 12 zur Steuereinheit 21, durch die vorzugsweise Werteinheiten in dem zugeordneten Speicherabschnitt ungültig gemacht werden. Wenn es jedoch ein beliebiger Leistungsanbieter ist, der von dem Datenträger 20 einen bestimmten Geldbetrag übertragen möchte, wird die Steuereinheit 21 entsprechend angesteuert und subtrahiert diesen Geldbetrag von dem in dem Speicherabschnitt, der fiir solche beliebigen Leistungsanbieter vorgesehen ist, z. B. den im Speicherabschnitt 27 vorhandenen Geldbetrag, und die Steuereinheit 21 überträgt diesen Geldbetrag über die Verbindung 12 zum Terminal 2, wie durch den entsprechenden Pfeil der Verbindung 12 angegeben ist. Ein Zugriff auf den Speicher 23, der allgemein einen größeren Geldbetrag enthält, ist dabei durch einen entsprechenden Aufbau des Datenträgers, insbesondere der Steuereinheit 21, nicht möglich.

Um zu verhindern, daß versehentlich oder betrügerisch ein zu hoher Geldbetrag zum Terminal 2 übertragen wird, ist im Speicherabschnitt 27 zweckmäßig nur der Geldbetrag enthalten, den der Benutzer des Datenträgers genehmigt hat, beispielsweise indem er vorher durch entsprechende Bedienung des Terminals 1 nur den gewünschten Geldbetrag vom Speicher 23 in den Speicherabschnitt 27 übertragen hat, wie anhand der Fig.2 beschrieben wurde. Eine fiir die Benutzung noch einfachere Möglichkeit besteht darin, daß zuerst der Datenträger 20 mit dem Terminal 2 in Verbindung gebracht wird, entweder über Kontakte oder günstiger kontaktlos, um vom Terminal 2 über eine Verbindung 12a den gewünschten Geldbetrag in den Eingabespeicher 21b zu übertragen. Dies kann durch Bedienung des Terminals 2 oder automatisch dadurch ausgelöst werden, daß der Speicherabschnitt 27, aus dem das Terminal 2 den Geldbetrag abbuchen. möchte, leer oder mit einem zu geringen Geldbetrag gefüllt ist. Nachdem der Eingabespeicher 21b eingeschrieben ist, verbindet der Benutzer des Datenträgers 20 diesen mit dem Terminal 1, wie anhand der Fig.2 beschrieben wurde, wobei der durch den Eingabespeicher angegebene Geldbetrag auf der Anzeigeeinheit 8 des Terminals 1 angezeigt wird. Durch Eingabe eines einfachen Bestätigungssignals wird der vom Eingabespeicher angegebene Geldbetrag aus dem Speicher 23 in den Speicherabschnitt 27 übertragen. Danach bringt der Benutzer den Datenträger 20 wieder mit dem Terminal 2 in Verbindung, indem er den Datenträger vom Terminal 1 trennt und in das Terminal 2 einführt, so daß über Kontakte eine Verbindung hergestellt werden kann. Eine andere Möglichkeit besteht darin, daß der Benutzer den Datenträger nicht vom Terminal 1 trennt, sondern zusammen in die Nähe des Terminals 2 bringt, wobei der Datenträger 20 dann mit Hilfe der Batterie im Terminal 1 den im Speicherabschnitt 27 enthaltenen Geldbetrag aktiv kontaktlos zum Terminal 2 überträgt. Ist der Datenträger 20 selbst mit einer Batterie ausgestattet, ist das Terminal 1 auch fiir die kontaktlose Übertragung entbehrlich.

Bei bestimmten Terminals 2, nämlich wenn diese Warenausgabeautomaten wie für Zigaretten oder Getränke sind, kann eine Ausnahme von dem Grundsatz gemacht werden, daß ein Terminal 2 auch nicht indirekt Zugriff auf den Speicher 23 hat. Wenn der Datenträger 20 mit einem solchen Terminal 2 verbunden wird und keinen ausreichenden Geldbetrag im Speicherabschnitt 27 enthält, überträgt das Terminal 2 ein Identifizierungssignal über die Verbindung 12 zum Datenträger 20, und daraufhin löst die Steuereinheit 21 die Übertragung eines durch das Identifizierungssignal bestimmten Geldbetrags vom Speicher 23 in den Speicherabschnitt 27 aus, wie durch die gestrichelten Linien 22 und 24 angedeutet ist, und nun kann das Terminal 2 diesen Geldbetrag vom Datenträger 20 übertragen und die Ware ausgeben. Da der übertragene Geldbetrag durch die Steuereinheit 21 des Datenträgers 20 bestimmt wird und derartige Geldbeträge für solche Warenautomaten nur gering sind, kann auch bei einer eventuellen Fehlfunktion nur ein geringer Schaden für den Benutzer entstehen.

In Fig. 4 ist schematisch dargestellt, wie mit Hilfe eines Terminals 3, das wie beschrieben durch ein Kartentelefon realisiert sein kann, ein Geldbetrag aus dem Speicher 23 des Datenträgers 20 in einen der wählbaren Speicherabschnitte 25 bis 27 übertragen wird. Bei entsprechender Bedienung der Tastatur 5 erzeugt die Steuereinheit 6 des Terminals 3 Steuerdaten, die über die Verbindung 12 zur Steuereinheit 21 des Datenträgers 20 übertragen werden. In ähnlicher Weise, wie anhand der Fig. 2 beschrieben wurde, steuert die Steuereinheit 21 über die Verbindung 22 den Speicher 23 und einen der Speicherabschnitte 25 bis 27 an, und aus dem Speicher 23 wird über die Verbindung 24 innerhalb des Datenträgers 20 der gewünschte Geldbetrag entsprechend den über die Verbindung 12 übertragenen Daten in den ausgewählten der Speicherabschnitte 25 bis 27 übertragen. In diesem Falle ist es nicht erforderlich, daß diese Übertragung in den Speicher 28 eingeschrieben wird, da die entsprechenden Daten unmittelbar von der Verarbeitungseinheit 6 in dem Terminal 3 gebildet und über die Verbindung 18 zum Rechner 19 übertragen werden können, oder der entsprechende Geldbetrag wird von dem Datenteräger 20 über die gestrichelt dargestellte Verbindung 14 zum Terminal 3 übertragen, um darin die entsprechenden Daten fiir die Übertragung zum Rechner 19 zu bilden.

Von der Steuereinheit 21 wird über die Verbindung 22 außerdem der Speicher 28 angesteuert und sein Inhalt über die Leitung 16 zum Terminal 3 übertragen. Es ist nämlich möglich, daß seit der letzten Verbindung des Datenträgers 20 mit einem Terminal 3 eine Übertragung innerhalb des Datenträgers mit Hilfe des Terminals 1, wie anhand der Fig. 2 beschrieben, erfolgt ist und entsprechende Daten in den Speicher 28 eingeschrieben worden waren. Die Daten in dem Speicher 28 werden gelöscht, sobald sie über die Leitung 16 ausgelesen worden sind.

In bestimmten Fällen, wenn der bestimme Leistungsanbieter, sei es ein Transportunternehmen, eine Parkplatzverwaltung oder ein anderer bestimmter Leistungsanbieter, dem Benutzer nicht erlauben möchte, eine Leistung in Anspruch zu nehmen, bevor der Leistungsanbieter im voraus eine Bezahlung erhalten hat, kann der Benutzer das erste Terminal dazu verwenden, Geldbeträge oder Werteinheiten dem bestimmten Leistungsanbieter zur Verfügung zu stellen, beispielsweise indem er die erforderliche Information in einen Teil des Speichers 28 abspeichert. Zu diesem Zeitpunkt kann der Datenträger noch nicht für die bestimmte Leistung verwendet werden. Sobald der Datenträger das nächste Mal mit dem dritten Terminal in Verbindung gebracht wird, werden die Daten betreffend das Guthaben des bestimmten Leistungsanbieters vom Speicher 28 über die Leitung 16 und das dritte Terminal 3 zum Rechner 19 übertragen, der dann verwendet werden kann, dem bestimmten Leistungsanbieter den Geldbetrag oder die Werteinheiten gutzuschreiben, die vorher durch den Benutzer im Speicher 28 abgespeichert worden waren. Dies gibt dem Geldbetrag oder Anzahl Werteinheiten fiir das Konto des bestimmten Leistungsanbieters frei un d lädt gleichzeitig den Speicherabschnitt, der den bestimmten Leistungsanbieter zugeordnet ist, mit dem gleichen Geldbetrag oder derselben Anzahl Werteinheiten. Danach kann der Datenträger bei dem Terminal dieses bestimmten Leistungsanbieters verwendet werden, um die Leistung von diesem Leistungsanbieter zu erhalten.

In den Figuren ist zwar ein einziger zweiter Speicher oder Speicherabschnitt 23 dargestellt, der mit dem wenigstens einem ersten Speicherabschnitt verbunden ist, jedoch ist klar, daß die Erfindung auch die Möglichkeit umfaßt, mehr als einen zweiten Speicher mit jeweils zugehörigen ersten Speicherabschnitten in einem einzigen Datenträger vorzusehen.

In Fig. 5 ist schematisch dargestellt, wie Geldbeträge bzw. Werteinheiten aus einem ausgewählten der Speicherabschnitte 25 bis 27 in den Speicher 23 zurückübertragen werden. Dies kann mit Hilfe eines Terminals 3, d.h. eines Kartentelefons mit einer schematisch dargestellten Anzeigeeinheit 4 und einer Tastatur 5 sowie einer Verarbeitungseinheit 6 erfolgen, oder auch mittels eines Terminals 1 mit ebenfalls einer schematisch dargestellten Anzeigeeinheit 8, einer Tastatur 9 und einer Verarbeitungseinheit 7, wobei der in Fig. 2 dargestellte Vergleicher 21a hier weggelassen ist, da er für diesen Vorgang nicht notwendig ist. Durch entsprechende Bedienung der Tastatur 5 bzw. 9 werden entsprechende Steuersignale über die Leitung 12 zur Steuereinheit 21 des Datenträgers 20 übertragen, und diese steuert über die Verbindung 22 den Speicher 23 und einen der Speicherabschnitte 25 bis 27 entsprechend an, und über die Verbindung 24a werden nun Daten zum Speicher 23 hin übertragen und darin eingeschrieben. Wenn diese Übertragung durch das Terminal 1 erfolgt, müssen die entsprechenden Daten, die die Übertragung angeben, in den Speicher 28 eingeschrieben werden, wie durch die gestrichelte Linie angedeutet ist. Andererseits, wenn diese Übertragung über ein Terminal 3 entsprechend einem Kartentelefon ausgelöst wurde, brauchen in den Speicher 28 keine entsprechenden Daten eingeschrieben zu werden, da diese Daten von der Verarbeitungseinheit 6 erzeugt werden können, die durch entsprechende Steuerbefehle über die Leitung 12 den entsprechenden Übertragungsvorgang in dem Datenträger 20 ausgelöst hat. Eine einfachere Steuerung ergibt sich jedoch möglicherweise, wenn die Daten in jedem Falle in den Speicher 28 übertragen werden, da dieser Speicher beim Verbinden des Datenträgers 20 mit einem Kartentelefon in jedem Falle über die hier gestrichelt dargestellte Verbindung 16 ausgelesen wird.

In Fig. 6 sind schematisch die Inhalte von zwei Speicherabschnitten 25 und 26 angedeutet. Der Einfachheit halber wird angenommen, daß die Speicher keine Geldbeträge, sondern Werteinheiten enthalten. Beide Speicherabschnitte 25 und 26 enthalten in diesem Beispiel sechzehn Werteinheiten; in der Praxis ist die tatsächliche Anzahl selbstverständlich größer. Geldbeträge oder Werteinheiten können in den Speichern tatsächlich in Form codierter Information gespeichert sein. Jede Werteinheit wird durch ein quadratisches Feld dargestellt. Felder, die ein x enthalten, stellen verbrauchte Werteinheiten dar, während die mit o bezeichneten Felder noch unverbrauchte Werteinheiten darstellen. Der Speicherabschnitt 25 enthält ferner ein Feld 31, und der Speicherabschnitt 26 enthält ein Feld 32, und in diesen Feldern sind Kennzeichnungen enthalten, die für den gesamten Speicher gelten. Insbesondere ist in diesem Feld angegeben, welchem Leistungsanbieter der betreffende Speicher zugeordnet ist. Wenn der Datenträger mit dem Terminal eines Leistungsanbieters in Verbindung gebracht wird, wird also zunächst geprüft, ob einer der Speicher in dem Kennzeichnungsfeld das Kennzeichen für den betreffenden Leistungsanbieter enthält. Wenn dies nicht der Fall ist, wird die gewünschte Leistung nicht gewährt.

Die Felder 31 und 32 können aber noch weitere Kennzeichnungen enthalten, insbesondere die Angabe eines Datums. Dies ist vorzugsweise das Datum, an dem in dem Speicher das letzte Mal etwas geändert wurde, also beispielsweise eine Werteinheit ungültig gemacht oder neue Werteinheiten eingeschrieben worden sind. Wenn der Datenträger, wie beispielsweise in Fig. 4 dargestellt, mit einem Terminal 3 in Verbindung gebracht wird, überträgt dieses Terminal auch das aktuelle Datum zur Steuereinheit 21. Wenn der Unterschied zwischen diesem aktuellen Datum und dem in Feld 31 oder 32 enthaltenen Datum einen vorgegebenen Wert überschreitet, kann die Steuereinheit 21 bestimmte Vorgänge auslösen. Beispielsweise kann die Steuereinheit 21 die in einem solchen Speicher mit einem genügend lange abgelaufenen Datum die restlichen Werteinheiten auslesen und als Geldbetrag in den Speicher 23 übertragen. Dies geht von der Annahme aus, daß ein Benutzer, der Leistungen eines bestimmten Leistungsanbieters längere Zeit nicht in Anspruch genommen hat, dies auch in nächster Zukunft wahrscheinlich nicht tun wird, so daß er dann über das restliche Guthaben fiir einen solchen Leistungsanbieter wieder frei verfügen kann.

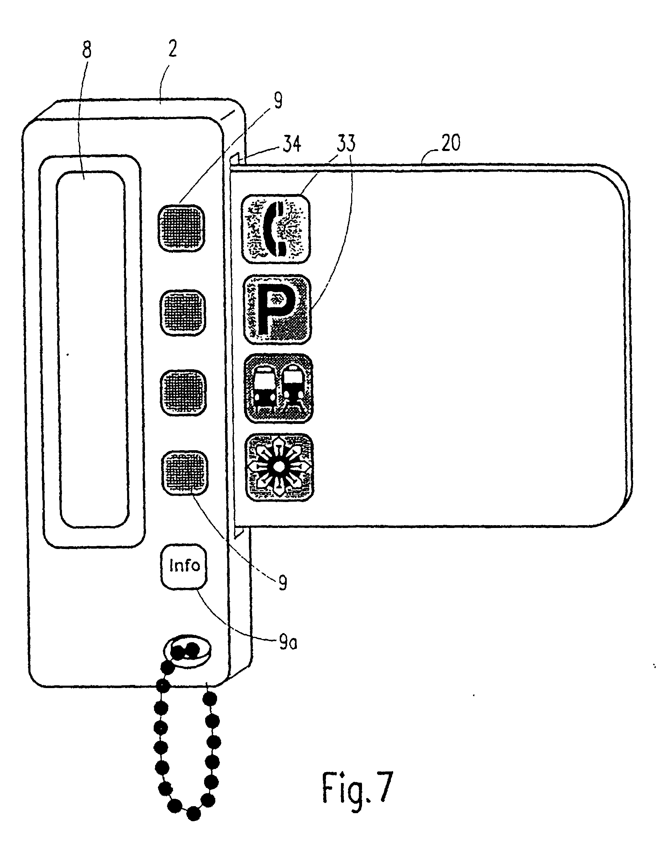

In Fig. 7 ist eine konkrete Ausführungsform eines Terminals 1 dargestellt, mit dem es möglich ist, Geldbeträge oder Werteinheiten von einem internen Speicher in einen extern zugänglichen Speicher zu übertragen. Dieses Terminal 1 hat eine längliche Form und weist eine Anzeigeeinheit 8 sowie vier Tasten 9 und eine weitere Taste 9a auf. Ferner ist ein Schlitz 34 vorgesehen, in den ein Datenträger 20 eingeführt werden kann, der das gängige Format einer Scheckkarte hat. Das Terminal 1 enthält ferner eine Energiequelle in Form einer Batterie, die nicht dargestellt ist und im unteren Bereich untergebracht sein kann. Die Tasten 9 haben hier keine Bezeichnung, statt dessen sind auf den Datenträger 20 Bezeichnungen 33 aufgedruckt, die nach dem Einführen des Datenträgers 20 in das Terminal 1 den Tasten 9 benachbart liegen. Die Bezeichnung bez. das Symbol in dem oberen Feld deutet ein Telefon an, und durch Betätigung der benachbarten Taste 9 können ein oder mehrere Blöcke von Werteinheiten aus dem internen Speicher des Datenträgers 20 in einen Speicher übertragen werden, aus dem bei Benutzung eines Kartentelefons Werteinheiten abgebucht bzw. ungültig gemacht werden. In entsprechender Weise deutet die Bezeichnung in dem nächsten Feld an, daß mit der zugehörigen Taste Werteinheiten in einen Speicher eingeschrieben werden können, um damit die Gebühren für die Benutzung eines Parkplatzes zu begleichen. Die Bezeichnung in dem dritten Feld deutet an, daß die benachbarte Taste dazu dient, einen Speicher in dem Datenträger aufzufüllen, in dem bei Benutzung eines öffentlichen Nahverkehrs Werteinheiten ungültig gemacht werden.

Mit Hilfe der Taste 9a können verschiedene Funktionen gesteuert werden. Insbesondere wird die Taste 9a betätigt, um das Bestätigungssignal auszusenden, aber sie kann auch andere Funktionen auslösen, beispielsweise das Zurückbuchen von Werteinheiten bzw. dem entsprechenden Geldbetrag in den internen Speicher des Datenträgers 20 bei zusätzlicher Betätigung der entsprechenden Taste 9.

Da die Tasten 9 keine Bezeichnungen tragen, sondern diese auf dem Datenträger 20 angebracht sind, ist es möglich, mit Hilfe des Terminals 1 verschiedene Arten von Datenträgern 20 mit Speichern für verschiedene Arten Leistungen von unterschiedlichen Leistungsanbietern mit demselben Terminal zu benutzen.

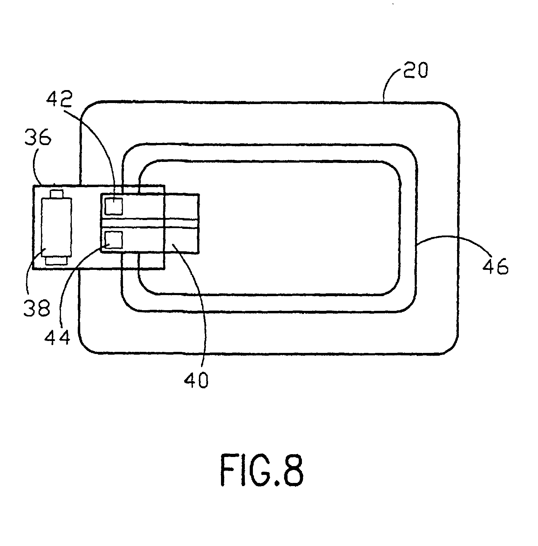

Die Fig.8 zeigt eine andere Ausgestaltung der Erfindung mit einem Datenträger bzw. einer Karte 20, die einen Chip 40 aufweist, der z.B. eine Steuereinheit in Form eines Mikroprozessors und einen oder mehrere Speicher gemäß der Erfindung oder gemäß dem Stand der Technik aufweist. Der Chip 40 weist ein Paar Kontakte auf, die normalerweise dazu dienen, galvanisch mit Kontakten in einem weiteren Terminal verbunden zu werden, das ein Terminal eines Leistungsanbieters, ein Schalterautomat einer Bank oder irgendein Gerät sein kann, das mit dem Chip 40 zusammenarbeiten kann. Der Datenträger 20 enthält außerdem eine Antennenschleife 46 oder anderes kontaktloses Mittel, das eine Kommunikation mit den Chip auf kontaktlose Weise ermöglicht. Diese Arten von kontaktloser Verbindung sind bekannt und schließen eine enge Kopplung ein, bei der die Karte in phyischen Kontakt mit einer Oberfläche gebracht wird. Die Schleife 46 bzw. die anderen Mittel ermöglichen auch eine Funktion durch eine lose Kopplung z.B. indem die Karte lediglich durch einen bestimmten Bereich bewegt wird. Es ist bekannt, daß derzeit verfügbare Mikroprozessoren, die einen Chip 40 aufweisen, einen Mindest-Leistungsbedarf zum Arbeiten benötigen. Die Funktionen eines Mikroprozessors können unterteilt werden in aktive Funktionen, die eine höhere Leistung erfordern, und passive Funktionen, die mit sehr niedriger Leistung ablaufen können. Ein Beispiel eine passiven Funktion ist das Lesen eines Speichers, während ein Beispiel für eine aktive Funktion die Änderung des Inhalts eines Speichers ist. Bei der derzeitigen Technik ist es bekannt, daß der Chip 40 nur über galvanische Kontakte 42 und 44 oder in manchen Fällen durch eine enge Kopplung über die kontaktlose Schleife 46 mit ausreichender Energie für eine aktive Funktion versorgt werden kann. Nur passive Funktionen sind möglich bei einer losen Kopplung über die Schleife 46, weil für die Durchführung aktiver Funktionen während der losen Kopplung zuwenig Leistung zur Verfügung steht. Gemäß der Erfindung kann ein erstes Terminal 36 vorgesehen werden, das eine Batterie oder eine andere darin befindliche Energiequelle aufweist sowie ferner Kontakte, die galvanisch mit den Kontakten 42 und 44 des Chips 40 verbunden werden. Der Zweck des ersten Terminals 36 ist dann lediglich, den Chip 40 mit Leistung zu versorgen, so daß dieser auch aktive Funktionen ausführen kann, auch wenn die Kommunikation zwischen dem Datenträger und dem Verkäuferterminal oder einem anderen geeigneten Terminal nur über eine lose Kopplung der Schleife 46 erfolgt. Die Hauptaufgabe dieses Aspekts der Erfindung ist es, eine lose Kopplung für einen Datenträger zuzulassen, während aktive, energieverbrauchende Funktionen im Chip durch die Verwendung des ersten Terminals 36 ausgeführt werden können, das mit dem Datenträger verbunden ist, beispielsweise indem eine Kante des Datenträgers mit den Kontakten 42 und 44 in einen Schlitz des Terminals 36 eingeführt ist. Das erste Terminal 1 in Fig. 2 kann ebenfalls dafür benutzt werden, die Karte auf diese Weise mit Energie zu versorgen.

Während bestimmte Ausführungsbeispiele der Erfindung dargestellt und beschrieben wurden, um die Anwendung des Prinzips der Erfindung zu erläutern, ist es klar, daß die Erfindung auch in anderen Ausführungsformen verkörpert werden kann, ohne von diesem Prinzip abzuweichen.

## Patentansprüche

1. Verfahren zum Bezahlen von in Anspruch genommenen oder zu nehmenden Leistungen von Leistungsanbietern mittels tragbarer Datenträger, von denen jeder einen Speicher mit wenigstens zwei Speicherabschnitten enthält, von denen wenigstens ein erster Speicherabschnitt und ein zweiter Speicherabschnitt für die Aufnahme von insbesondere einen Geldbetrag darstellenden Daten vorgesehen ist, wobei zum Ein-schreiben von Daten in den ersten Speicherabschnitt eines Datenträgers dieser mit einem von mehreren ersten Terminals in Wirkverbindung gebracht wird, um abhängig von einer ersten Bedienung des ersten Terminals einen vorgebbaren Geldbetrag von dem zweiten Speicherabschnitt des Datenträgers abzubuchen und in den ersten Speicherabschnitt einzuschreiben, und zur Inanspruchnahme einer Leistung eines Leistungsanbieters der Datenträger mit einem zweiten Terminal in Wirkverbindung gebracht und ein Geldbetrag aus dem ersten Speicherabschnitt abgebucht wird,
**dadurch gekennzeichnet, daß** zwischen jeweils einem bestimmten Datenträger und einem bestimmten ersten Terminal eine von anderen Datenträgern und anderen ersten Terminals unabhängige eindeutige, irreversible und überprüfbare Zuordnung besteht.

2. Verfahren nach Anspruch 1, **dadurch gekennzeichnet, daß** die Zuordnung geheim ist.

3. Verfahren nach Anspruch 1 oder 2, **dadurch gekennzeichnet, daß** bei der erstmaligen Verbindung eines bestimmten Datenträgers mit einem bestimmten ersten Terminal die eindeutige, irreversible und überprüfbare Zuordnung zwischen diesem Datenträger und diesem ersten Terminal hergestellt wird, indem von einem dieser beiden Teile eine Information zum jeweils anderen Teil übertragen und in wenigstens einem der beiden Teile gespeichert wird.

4. Verfahren nach Anspruch 3, **dadurch gekennzeichnet, daß** die Übertragung der Information nur nach vorheriger Eingabe einer geheimen Information in das erste Terminal erfolgt.

5. Verfahren nach Anspruch 3 oder 4, **dadurch gekennzeichnet, daß** bei einer nach der erstmaligen Verbindung folgenden Verbindung des bestimmten Datenträgers mit einem anderen ersten Terminal nur dann die Information übertragen wird, wenn vorher eine Geheiminformation in dieses andere Terminal eingegeben und mit einer im Datenträger enthaltenen Geheiminformation erfolgreich verglichen wird, und nach einer vorgegeben Anzahl Male, die der Datenträger mit einem anderen ersten Terminal verbunden wird und die Geheiminformation eingegeben wird, keine Information mehr übertragen wird.

6. Verfahren nach einem der vorhergehenden Ansprüche, **dadurch gekennzeichnet, daß** vor der erstmaligen Verbindung eines Datenträgers mit einem ersten Terminal das Abbuchen von Geldbeträgen durch ein zweites Terminal bei einer Verbindung des Datenträgers mit dem zweiten Terminal ohne vorherige Übertragung eines Geldbetrags vom zweiten Speicherabschnitt in einen ersten Speicherabschnitt freigegeben ist.

7. Verfahren nach einem der Ansprüche 1 bis 5, **dadurch gekennzeichnet, daß** in wenigstens einem der Datenträger ein Eingabespeicher angeordnet ist, in den einen Geldbetrag angebende Daten eingebbar sind, wobei nach Herstellen einer Wirkverbindung dieses Datenträgers mit dem zugeordneten ersten Terminal der im Eingabespeicher angegebene Geldbetrag angezeigt und nach einem Bestätigungssignal über das erste Terminal dieser Geldbetrag von dem zweiten Speicherabschnitt in den wenigstens einen ersten Speicherabschnitt übertragen wird.

8. Verfahren nach Anspruch 7, **dadurch gekennzeichnet, daß** nach Herstellen einer Wirkverbindung eines derartigen Datenträgers mit einem zweiten Terminal durch dieses ein bestimmter Geldbetrag in den Eingabespeicher eingeschrieben wird.

9. Verfahren nach einem der vorhergehenden Ansprüche, **dadurch gekennzeichnet, daß** von dem mit dem zugeordneten ersten Terminal verbundenen Datenträger durch eine vorgegebene Betätigung des ersten Terminals der im ersten Speicherabschnitt enthaltene Geldbetrag aktiv zum zweiten Terminal übertragen wird.

10. Verfahren nach einem der vorhergehenden Ansprüche, bei dem mehrere zweite Terminals vorhanden sind und der Datenträger wahlweise mit einem der zweiten Terminals in Wirkverbindung gebracht wird, **dadurch gekennzeichnet, daß** wenigstens einige der zweiten Terminals ein Identifizierungssignal zum Datenträger übertragen und diesen veranlassen, einen vom Identifizierungssignal abhängigen Geldbetrag direkt ohne Verwendung des ersten Terminals vom zweiten Speicherabschnitt in den bzw. einen ersten Speicherabschnitt zu übertragen und daraus in das zweite Terminal zu übertragen.

11. Verfahren nach einem der Ansprüche 1 bis 5, **dadurch gekennzeichnet, daß** mehrere erste Speicherabschnitte vorgesehen sind, von denen wenigstens zwei je einem anderen von mehreren Leistungsanbietern zugeordnet sind, und der Speicherabschnitt, in den Geldbeträge eingeschrieben werden, bei Verbindung mit dem ersten Terminal oder einem dritten Terminal ausgewählt wird, wobei das dritte Terminal mit einem kontoführenden Rechner verbunden ist.

12. Verfahren nach Anspruch 11, **dadurch gekennzeichnet, daß** in wenigstens einen der ersten Speicherabschnitte die Geldbeträge in Form von Werteinheiten darstellende Daten eingeschrieben werden und zur Inanspruchnahme einer Leistung eines bestimmten Leistungsanbieters Werteinheiten in dem diesem Leistungsanbieter zugeordneten ersten Speicherabschnitt durch das zweite Terminal ungültig gemacht werden, indem entsprechende Daten geändert werden.

13. Verfahren nach Anspruch 12, **dadurch gekennzeichnet, daß** den in wenigstens einem ersten Speicherabschnitt enthaltenen Werteinheiten Abbuchungs-Kennzeichnungen zugeordnet sind, die beim Ändern der die Werteinheiten darstellenden Daten eingeschrieben werden und die von außerhalb des Datenträgers auslesbar sind.

14. Verfahren nach Anspruch 12 oder 13, **dadurch gekennzeichnet, daß** der Datenträger mit dem zugeordneten ersten Terminal in Wirkverbindung gebracht wird, um einen Geldbetrag darstellende Daten aus dem zweiten Speicherabschnitt insbesondere als Werteinheiten darstellende Daten in einen wählbaren ersten Speicherabschnitt zu übertragen und diese Übertragung angebende Daten, die insbesondere den dem ersten Speicherabschnitt zugeordneten Leistungsanbieter und den Geldbetrag angeben, in einen dritten Speicherabschnitt abzuspeichern, wobei diese Daten bei jeder Verbindung des Datenträgers mit einem dritten Terminal automatisch ausgelesen und an den damit verbundenen Rechner übertragen werden..

15. Verfahren nach Anspruch 12 oder 13, **dadurch gekennzeichnet, daß** der Datenträger mit einem dritten Terminal in Wirkverbindung gebracht wird, um durch eine erste Bedienung des dritten Terminals einen Geldbetrag darstellende Daten aus dem zweiten Speicherabschnitt insbesondere als Werteinheiten darstellende Daten in einen wählbaren ersten Speicherabschnitt zu übertragen und diese Übertragung angebende Daten über das dritte Terminal an den damit verbundenen Rechner zu übertragen.

16. Verfahren nach einem der Ansprüche 12 bis 15, **dadurch gekennzeichnet, daß** durch eine zweite Bedienung des dritten Terminals die in einem wählbaren ersten Speicherabschnitt enthaltenen Werteinheiten abgebucht und in Form eines Geldbetrags in den zweiten Speicherabschnitt eingespeichert werden und diesen Vorgang angebende Daten über das dritte Terminal an den damit verbundenen Rechner übertragen werden.

17. Verfahren nach einem der Ansprüche 12 bis 15, **dadurch gekennzeichnet, daß** durch eine zweite Bedienung des ersten Terminals die in einem wählbaren ersten Speicherabschnitt enthaltenen Werteinheiten abgebucht und in Form eines Geldbetrages in den zweiten Speicherabschnitt eingespeichert werden und in den dritten Speicherabschnitt Daten, die diesen Vorgang kennzeichnen, eingeschrieben werden und diese Daten bei jeder Verbindung des Datenträgers mit einem dritten Terminal automatisch ausgelesen und an den damit verbundenen Rechner übertragen werden.

18. Verfahren nach einem der Ansprüche 12 bis 15, **dadurch gekennzeichnet, daß** die in wenigstens einem ersten Speicherabschnitt enthaltenen Werteinheiten eine von mehreren Kennzeichnungen aufweisen, die unterschiedlichen Leistungsanbietern der gleichen Art von Leistungen zugeordnet sind, und abhängig von der Bedienung des dritten Terminals ein vorgebbarer Geldbetrag aus dem zweiten Speicherabschnitt abgebucht und in Form von Werteinheiten mit einer wählbaren ersten Kennzeichnung in einen ersten Speicherabschnitt abgespeichert werden und diesen Vorgang angebende Daten über das dritte Terminal in den damit verbundenen Rechner übertragen werden.

19. Verfahren nach einem der Ansprüche 11 bis 15, **dadurch gekennzeichnet, daß** das Abbuchen eines ausgewählten Geldbetrags vom zweiten Speicherabschnitt und das Einschreiben dieses Geldbetrags in den wenigstens einen ersten Speicherabschnitt diesen Geldbetrag diesem wenigstens einen ersten Speicherabschnitt nur vorläufig zuordnet und
wobei der Datenträger mit dem dritten Terminal in Verbindung gebracht wird, um den ausgewählten Geldbetrag einem bestimmten Leistungsanbieter, der dem wenigstens einen Speicherabschnitt zugeordnet ist, gutzuschreiben und danach den vorläufig zugeordneten Geldbetrag in dem wenigstens einen ersten Speicherabschnitt freizugeben, um das Abbuchen von Geld aus dem wenigstens einen ersten Speicherabschnitt zu ermöglichen, wenn der Datenträger mit einem zu dem bestimmten Leistungsanbieter gehörenden Terminal in Verbindung gebracht wird.

20. Verfahren nach einem der Ansprüche 12 bis 15, **dadurch gekennzeichnet, daß** wenigstens einer der ersten Speicherabschnitte eine weitere Kennzeichnung aufweisen, die ein Datum darstellt und die bei jeder Veränderung des Inhalts des betreffenden ersten Speicherabschnitts aktualisiert wird und die, wenn der Datenträger mit einem dritten Terminal in Wirkverbindung gebracht wird, mit dem aktuellen Datum verglichen wird,
wobei beim Überschreiten eines vorgegebenen Unterschieds zwischen dem aktuellen Datum und dem Datum gemäß der weiteren Kennzeichnung die Werteinheiten des betreffenden ersten Speicherabschnitts abgebucht und als Geldbetrag in den zweiten Speicherabschnitt übertragen und diese Übertragung kennzeichnende Daten über das dritte Terminal an den damit verbundenen Rechner übertragen werden.

21. System zum Durchführen des Verfahrens nach Anspruch 1 mit tragbaren Datenträgern, von denen jeder eine Steuereinheit und einen Speicher mit wenigstens einem ersten Speicherabschnitt und einen zweiten Speicherabschnitt enthält, und mit mehreren Terminals, mit denen jeder Datenträger wahlweise verbindbar ist, um Informationen auszutauschen,
wobei erste Terminals Datenträgern zugeordnet und eingerichtet sind, um nach erfolgreicher Prüfung der Zuordnung bei einer vorgegebenen ersten Bedienung die Steuereinheit eines mit dem ersten Terminal verbundenen Datenträgers anzusteuern, Geldbeträge darstellende Daten in dem zweiten Speicherabschnitt und in dem ersten Speicherabschnitt voneinander abhängig zu verändern, und
wobei zweite Terminals eingerichtet sind, um die Steuereinheit eines damit verbundenen Datenträgers zum Verändern der Daten eines ersten Speicherabschnitts anzusteuern,
**dadurch gekennzeichnet, daß** wenigstens einige Datenträger und erste Terminals je einen Geheimzahlspeicher enthalten, um für jeweils einen bestimmten Datenträger und ein bestimmtes Terminal je eine der anderen individuell eindeutig zugeordnete Geheimzahl zu speichern, und der Datenträger und das erste Terminal eingerichtet sind, um bei jeder Verbindung nur nach Feststellen einer vorgegebenen Beziehung zwischen den Geheimzahlen im Datenträger die voneinander abhängige Veränderung der Daten im zweiten Speicherabschnitt und in dem ausgewählten ersten Speicherabschnitt freizugeben.

22. System nach Anspruch 21, **dadurch gekennzeichnet, daß** die Datenträger und die ersten Terminals eingerichtet sind, um beim erstmaligen Verbinden eine vorgegebene einmalige Datenübertragung durchzuführen, die die Geheimzahlen für beide Geheimzahlspeicher festlegt.

23. System nach Anspruch 21 oder 22, **dadurch gekennzeichnet, daß** die Datenträger einen Eingabespeicher aufweisen und die ersten Terminals eingerichtet sind, um die Steuereinheit des Datenträgers anzusteuern, einen dem Inhalt des Eingabespeichers entsprechenden Geldbetrag vom zweiten Speicherabschnitt in den wenigstens einen ersten Speicherabschnitt zu übertragen.

24. System nach einem der Ansprüche 21 bis 23, **dadurch gekennzeichnet, daß** der Speicher der Datenträger mehrere erste Speicherabschnitte aufweist und die ersten Terminals eingerichtet sind, um abhängig von deren Bedienung in einen ausgewählten ersten Speicherabschnitt Werteinheiten einzuschreiben, und die Steuereinheit der Datenträger eingerichtet ist, um dieses Einschreiben von Werteinheiten kennzeichnende Daten in einen dritten Speicherabschnitt einzuschreiben, und die zweiten Terminals eingerichtet sind, Daten nur in einem dem betreffenden zweiten Terminal zugeordneten ersten Speicherabschnitt zu verändern.

25. System nach Anspruch 24, **dadurch gekennzeichnet, daß** wenigstens ein drittes Terminal vorgesehen ist, mit dem die Datenträger wahlweise verbindbar sind, um bei einer vorgegebenen ersten Bedienung des dritten Terminals die Steuereinheit der Datenträgers anzusteuern, um Geldbeträge darstellende Daten aus einem an das dritte Terminal angeschlossenen Rechner in den zweiten Speicherabschnitt zu übertragen und einzuschreiben sowie Daten aus dem dritten Speicherabschnitt in den Rechner zu übertragen.

26. System nach Anspruch 25, **dadurch gekennzeichnet, daß** bei einer vorgegebenen ersten Bedienung des dritten Terminals die Steuereinheit der Datenträger ansteuerbar ist, um Daten im zweiten Speicherabschnitt und in einem ausgewählten ersten
Speicherabschnitt voneinander abhängig zu verändern und diese Veränderung angebende Daten über das dritte Terminal in den daran angeschlossenen Rechner zu übertragen.

27. Tragbarer Datenträger für ein System nach einem der Ansprüche 21 bis 26 mit einer Steuereinheit und mit einem Speicher mit wenigstens einem ersten Speicherabschnitt und einem zweiten Speicherabschnitt, und mit einer Schnittstelle nach außerhalb, die mit dem Speicher und mit der Steuereinheit gekoppelt ist, um dem Speicher Geldbeträge darstellende Daten zuzuführen und der Steuereinheit Steuerbefehle zuzuführen, wobei die Steuereinheit eingerichtet ist, um beim Zuführen
erster Steuerbefehle Geldbeträge darstellende Daten nur in einem ersten Speicherabschnitt zu verändern,
zweiter Steuerbefehle Geldbeträge darstellende Daten aus dem zweiten Speicherabschnitt abzubuchen und in einen ersten Speicherabschnitt einzuschreiben, dritter Steuerbefehle Geldbeträge darstellende, über die Schnittstelle zugeführte Daten in den zweiten Speicherabschnitt einzuschreiben,
**dadurch gekennzeichnet, daß** ein Geheimzahlspeicher zum Speichern einer individuellen Geheimzahl und eine Vergleichseinrichtung vorgesehen sind, die die Steuereinheit nach dem Zuführen der zweiten Steuerbefehle nur dann zum Abbuchen von Geldbeträge darstellenden Daten aus dem zweiten Speicherabschnitt freigibt, wenn eine zugeführte Geheimzahl eine vorgegebene Beziehung zu der gespeicherten Geheimzahl erfüllt.

28. Tragbarer Datenträger nach Anspruch 27 mit einem Eingabespeicher zum Aufnehmen von einen Geldbetrag angebenden Daten, wobei die Steuereinheit eingerichtet ist, um beim Zuführen zweiter Steuerbefehle dem Inhalt des Eingabespeichers entsprechende Daten vom zweiten Speicherabschnitt abzubuchen und in einen ersten Speicherabschnitt einzuschreiben.

29. Tragbarer Datenträger nach Anspruch 27 oder 28, **dadurch gekennzeichnet, daß** der Speicher mehrere erste Speicherabschnitte und einen dritten Speicherabschnitt aufweist und die Steuereinheit eingerichtet ist, um in einem durch den ersten Steuerbefehl ausgewählten ersten Speicherabschnitt Daten zu verändern und um in einen durch den zweiten Steuerbefehl ausgewählten ersten Speicherabschnitt Werteinheiten darstellende Daten einzuschreiben und Daten, die diesen Vorgang kennzeichnen, abhängig von den zweiten Steuerbefehlen in den dritten Speicherabschnitt einzuschreiben oder über die Schnittstelle auszugeben, und um beim Zuführen vierter Steuerbefehle die Daten aus dem dritten Speicherabschnitt auszulesen und über die Schnittstelle abzugeben.

30. Tragbarer Datenträger nach einem der Ansprüche 27 bis 29, **dadurch gekennzeichnet, daß** die Steuereinheit eingerichtet ist, um beim Zuführen fünfter Steuerbefehle Werteinheiten in einem durch die fünften Steuerbefehle ausgewählten ersten Speicherabschnitt abzubuchen und als einen Geldbetrag darstellende Daten in den zweiten Speicherabschnitt einzuschreiben und Daten, die diesen Vorgang kennzeichnen, abhängig vom fünften Steuerbefehl in den dritten Speicherabschnitt einzuschreiben oder über die Schnittstelle auszugeben.

31. Tragbarer Datenträger nach einem der Ansprüche 27 bis 30, **dadurch gekennzeichnet, daß** die Steuereinheit des Datenträgers programmgesteuert ist und einen Programmspeicher enthält und abhängig von den zumindest durch das erste Terminal zugeführten Steuerbefehlen die Steuereinheit vorgegebene Programmteile in dem Programmspeicher zur Ausführung bringt.

32. Tragbarer Datenträger nach Anspruch 27, **dadurch gekennzeichnet, daß** die Steuereinheit eingerichtet ist, um beim erstmaligen Verbinden des Datenträgers mit einem ersten Terminal eine vorgegebene Datenübertragung bezüglich der Geheimzahlen einmalig durchzuführen.

33. Tragbarer Datenträger nach einem der Ansprüche 27 bis 32 für ein System nach Anspruch 21 mit einem Dateneingabemittel und einem Anzeigemittel, die beide mit der Steuereinheit verbunden sind.

34. Terminal für ein System nach einem der Ansprüche 21 bis 26 zur Verwendung als erstes Terminal mit Anzeigeelementen, Bedienungselementen und einer Aufnahmevorrichtung zum Verbinden mit einem tragbaren Datenträger, **dadurch gekennzeichnet, daß** eine Steuereinrichtung mit einem Speicher zum Speichern wenigstens einer individuellen Geheiminformation vorgesehen ist, wobei die Steuereinrichtung eingerichtet ist, die Geheiminformation bei jeder Verbindung mit einem tragbaren Datenträger automatisch auszulesen und zum tragbaren Datenträger zu übertragen.

35. Terminal nach Anspruch 34, **dadurch gekennzeichnet, daß** die Steuereinrichtung eingerichtet ist, beim erstmaligen Verbinden des Terminals mit einem tragbaren Datenträger eine vorgegebene Datenübertragung bezüglich der Geheiminformation einmalig automatisch durchzuführen.

36. Terminal nach Anspruch 34 oder 35, **dadurch gekennzeichnet, daß** die Steuereinrichtung eingerichtet ist, bei einer vorgegebenen Betätigung der Bedienungselemente einen Steuerbefehl an einen mit dem Terminal verbundenen Datenträger abzugeben, der im Datenträger die Übertragung von durch den Inhalt eines Eingabespeichers bestimmten Daten von einem zweiten Speicherabschnitt in einen ersten Speicherabschnitt auslöst.

37. System nach Anspruch 21 mit einem Datenträger, der eine Steuereinheit zum Ausführen mehrerer Funktionen, eine Schnittstelle zum Herstellen einer Kommunikationsverbindung mit der Steuereinheit und eine Mehrzahl von sichtbaren Bezeichnungen auf dem Datenträger aufweist, von denen jede Bezeichnung einer Funktion entspricht, und mit einem Benutzerterminal zum Aufnehmen des Datenträgers und zum Verbinden mit der Schnittstelle für eine Kommunikation mit der Steuereinheit,
wobei der Datenträger im aufgenommenen Zustand eine bestimmte Position relativ zum Terminal hat, und das Terminal eine Mehrzahl von Tasten, von denen jede Taste einer Bezeichnung auf dem Datenträger gegenüberliegt, und mit den Tasten verbundene Funktionsmittel aufweist, die eine ausgewählte Funktion in der Steuereinheit auslösen, wenn die der Bezeichnung entsprechende Taste betätigt wird.

38. System nach Anspruch 37, **dadurch gekennzeichnet, daß** der Datenträger eine Mehrzahl von Speichern aufweist, von denen jeder Daten entsprechend der Bezahlung eines bestimmten Leistungsanbieters enthält, und wobei die Mehrzahl von Bezeichnungen einer Mehrzahl verschiedener Leistungsanbieter entspricht und von den Tasten jede zur Bezahlung eines bestimmten Leistungsanbieters betätigbar ist.

39. System nach Anspruch 37, **dadurch gekennzeichnet, daß** der Datenträger eine Mehrzahl von Speichern aufweist, von denen jeder Programmdaten entsprechend einer unterschiedlichen Funktion enthält, und wobei die Mehrzahl von Bezeichnungen der Mehrzahl unterschiedlicher Funktionen entspricht und die Mehrzahl von Tasten zur Ausführung einer entsprechenden der unterschiedlichen Funktionen betätigbar ist.

40. System nach Anspruch 21 mit einem Datenträger, der einen Chip zum Ausführen von aktiven Funktionen mit hohem Leistungsbedarf und von passiven Funktionen mit niedrigem Leistungsbedarf enthält, wobei der Chip wenigstens einen Kontakt zum galvanischen Kontaktieren eines Terminalkontakts, um elektrische Leistung zum Durchführen der aktiven Funktionen zu empfangen, und eine kontaktlose, mit dem Chip verbundene Koppeleinrichtung aufweist, die sich über den Datenträger fiir eine Kopplung mit einem Terminal zum Ausführen von passiven Funktionen erstreckt, und mit einem Benutzerterminal, das eine elektrische Engergiequelle und wenigstens einen Kontakt zum Kontaktieren des Chipkontakts aufweist, wenn der Datenträger in das Benutzerterminal aufgenommen ist, um den Chip mit Hilfe der Energiequelle mit Leistung zur Ausführung aktiver Funktionen zu versorgen, wenn Signale über eine lose Kopplung von der kontaktlosen Koppeleinrichtung eintreffen.

41. System nach Anspruch 40, **dadurch gekennzeichnet, daß** die Energiequelle eine Batterie im Benutzerterminal ist.

42. System nach Anspruch 40, **dadurch gekennzeichnet, daß** die mit dem Chip verbundene Koppeleinrichtung bei einer engen Kopplung für aktive Funktionen und bei einer losen Kopplung für passive Funktionen dient.

## Claims

1. Method for paying for services used or to be utilized of a service provider by means of portable data media, each having a memory with at least two memory sections, at least a first memory section and a second memory section provided for receiving data preferably representing an amount of money, for writing data into the first memory section of a data medium this data medium is brought into operative connection with one of a plurality of first terminals in order to deduct, as a function of a first operation of the first terminal,
a selectable amount of money from the second memory section and to write this amount into the first memory section, and for utilizing a service of a service provider the data medium is brought into operational connection with a second terminal and an amount of money is deducted from the first memory section,
**characterized in that** between a specific data medium and a specific first terminal respectively a unique, irreversible and checkable relationship independent from other data media and other first terminals exists.

2. Method as stated in claim 1, **characterized in that** the relationship is secret.

3. Method as stated in claim 1 or 2, **characterized in that** during the initial connection of a specific data medium with a specific first terminal the unique, irreversible and checkable relationship is established between this data medium and this first terminal by transferring information from one of these two parts to the respective other and storing it in at least one of these two parts.

4. Method as stated in claim 3, **characterized in that** the transferring of information occurs only after previously entering of a secret information into the first terminal.

5. Method as stated in claim 3 or 4, **characterized in that** during a connection following the initial connection of the specific data medium with another first terminal the information is transferred only if previously a secret information is entered into this other terminal and compared successfully with an information stored in the first data medium, and that after a predetermined number of times of connecting the data medium with another first terminal and entering the secret information no information is transferred any longer.

6. Method as stated in any of the preceding claims, **characterized in that** before the initial connection of a data medium with a first terminal the deducting of amounts of money by a second terminal during connection of the data medium with the second terminal is released without a preceding transfer of an amount of money from the second memory section into the first memory section.

7. Method as stated in one of the claims 1 to 5, **characterized in that** in at least one of the data media an input memory is provided into which data representing an amount of money can be written, the amount of money written into the input memory is displayed after establishing an operative connection of this data medium with the assigned first terminal and this amount of money is transferred from the second memory section into at least one first memory section after a confirmation signal via the first terminal.

8. Method as stated in claim 7, **characterized in that** after establishing an operative connection of such data medium with a second terminal a specific amount of money is written into the input memory by this second terminal.

9. Method as stated in one of the preceding claims, **characterized in that** from the data medium connected with the assigned first terminal the amount of money contained in the first memory section is actively transferred into the second terminal by a predetermined operation of the first terminal.

10. Method as stated in one of the preceding claims, in which a plurality of second terminals exist and the data medium is brought selectably in operative connection with one of the second terminals, **characterized in that** at least some of the second terminals transfer an identification signal to the data medium to cause this to transfer an amount of money which is dependent on the identification signal, directly without use of the first terminal, from the second memory section into the or one of the first memory sections, respectively, and from there into the second terminal.

11. Method as stated in one of the claims 1 to 5, **characterized in that** a plurality of first memory sections is provided, of which at least two are respectively assigned to different service providers and the memory section into which amounts of money are written is selected during connection with the first terminal or a third terminal, the third terminal being connected with an account handling computer.

12. Method as stated in claim 11, **characterized in that** into at least one of the first memory sections the amounts of money are written in the form of data representing value units, for utilizing a service of a specific service provider value units in this memory section assigned to this service provider are invalidated by altering corresponding data.

13. Method as stated in claim 12, **characterized in that** debit marks are assigned to the value units contained in at least one first memory section, which debit marks are written while altering the data representing value units and readable from outside of the data medium.

14. Method as stated in claim 12 or 13, **characterized in that** the data medium is brought in operative connection with the assigned first terminal in order to transfer data representing an amount of money from the second memory section in particular in the form of data representing value units into a selectable first memory section and to store in a third memory section data identifying this transfer which indicate particularly the service provider and the amount of money, these data being read automatically upon every connection of the data medium with a third terminal and transferred to the computer connected therewith.

15. Method as stated in claim 12 or 13, **characterized in that** the data medium is brought into operative connection with a third terminal in order to, by a first operation of the third terminal, transfer data representing an amount of money from the second memory section in the form of data particularly representing value units into a selectable first memory section and to transmit data identifying this transfer via the third terminal to the computer connected therewith.

16. Method as stated in one of the claims 12 to 15, **characterized in that**, by a second operation of the third terminal, the value units contained in a selectable first memory section are deducted and stored in the form of an amount of money in the second memory section and data identifying this procedure are transmitted via the third terminal to the computer connected therewith.

17. Method as stated in one of the claims 12 to 15, **characterized in that**, by a second operation of the first terminal, the value units contained in a selectable first memory section are deducted and stored in the form of an amount of money in the second memory section, data identifying this procedure are stored in the third memory section and read out automatically during every connection of the data medium with a third terminal and transmitted to the computer connected therewith.

18. Method as stated in one of the claims 12 to 15, **characterized in that** the value units contained in at least one first memory section comprise one of several identifiers assigned to different service provider of the same type of services, and, depending on the operation of the third terminal, a selectable amount of money is deducted from the second memory section and stored in the form of value units with a selectable first identifier in a first memory section, data identifying this procedure being transmitted via the third terminal into the computer connected therewith.

19. Method as stated in one of the claims 11 to 15, **characterized in that** deducting of a selected amount of money from the second memory section and writing of this amount of money into the at least one first memory section assigns this amount of money to this at least one first memory section only provisionally and the data medium is brought into connection with the third terminal in order to credit the selected amount of money to a specific service provider assigned to this at least one memory section and then to release this provisionally assigned amount of money in the at least one first memory section for permitting the deducting of money from the at least one first memory section when the data medium is connected with a terminal of the specific service provider.

20. Method as stated in one of the claims 12 to 15, **characterized in that** at least one of the first memory sections comprises a further identifier which represents a date and is updated upon every altering of the contents of the relevant first memory section and is compared with the current date when the data medium is brought in operational connection with a third terminal, and when a predetermined difference between the current date and the date according to the further identifier is exceeded, the value units of the relevant first memory section are deducted and transferred as an amount of money into the second memory section and data identifying this transfer are transmitted via the third terminal to the computer connected therewith.

21. System for executing the method as stated in claim 1, comprising portable data media each including a control unit and a memory having at least one first memory section and a second memory section, and comprising a plurality of terminals with which each data medium may be connected at choice in order to exchange information,
first terminals assigned to data media and adapted to control, by a predetermined first operation after successful check of the allocation, the control unit to alter mutually dependent data representing amounts of money in the second memory section and in the first memory section,
and second terminals adapted to control the control unit of a data medium connected therewith to alter the data of a first memory section,
**characterized in that** at least some of the data media and first terminals each contain a secret number memory to store a secret number individually uniquely assigned to a specific data medium and a specific terminal, respectively, and the data medium and the first terminal are adapted upon every connection to release the altering of data in the second memory section and in the selected first memory section in the data medium only after the confirmation of a predetermined relationship between the secret numbers.

22. System as stated in claim 21, **characterized in that** the data medium and the first terminals are adapted, upon a first initial connection, to perform a predetermined single transfer of data which determines the secret numbers for both secret number memories.

23. System as stated in claim 21 or 22, **characterized in that** the data media comprise an input memory and that the first terminals are adapted to control the control unit of the data medium to transfer an amount of money corresponding with the contents of the input memory from the second memory section to the at least one first memory section.

24. System as stated in one of the claims 21 to 23, **characterized in that** the memory of the data medium comprises a plurality of first memory sections, that the first terminals are adapted to write, dependent on their operation, value units into a selected first memory section, that the control unit of the data medium is adapted to write data identifying this writing of value units into a third memory section and that the second terminals are adapted to alter data only in the first memory section assigned to the relevant second terminal.

25. System as stated in claim 24, **characterized in that** at least one third terminal is provided with which the data media can be connected at choice to control the control unit of the data medium to transfer data representing amounts of money from a computer connected with the third terminal into the second memory section and to transfer data from the third memory section into the computer.

26. System as stated in claim 25, **characterized in that** upon a predetermined operation of the third terminal the control unit of the data medium can be controlled to alter mutually dependent data in the second memory section and in a selected first memory section and to transfer data identifying this altering via the third terminal into the computer connected therewith.

27. Portable data medium for a system as stated in one of the claims 21 to 26 comprising a control unit, a memory having at least one first memory section and a second memory section and an interface to the outside which is coupled with the memory and with the control unit in order to supply data representing amounts of money to the memory and control commands to the control unit, the control unit adapted,
upon receiving first control commands, to alter data representing amounts of money only in a first memory section,
upon receiving second control commands, to deduct data representing amounts of money from the second memory section and to write them into a first memory section,
upon receiving third control commands, to write data representing amounts of money and supplied via the interface into a second memory section,
**characterized in that** there is provided a secret number memory for storing an individual secret number and a comparing unit for releasing the control unit to deduct, after receiving second control commands, data representing amounts of money from the second memory section only if a received secret number satisfies a given relationship to the stored secret number.

28. Portable data medium as stated in claim 27 having an input memory for receiving data representing an amount of money, the control unit adapted to deduct, upon receiving second control commands, data corresponding to the contents of the input memory from the second memory section and to write them into a first memory section.

29. Portable data medium as stated in claim 27 or 28, **characterized in that** the memory comprises a plurality of first memory sections and a third memory section and that the control unit is adapted to alter data in a first memory section selected by the first control command and to write data representing value units into a first memory section selected by the second control command and to write data identifying this procedure into the third memory section or to output them via the interface and, upon supplied with forth control commands, to read the data from the third memory section and output them via the interface.

30. Portable data medium as stated in one of the claims 27 to 29, **characterized in that** the control unit is adapted to deduct, upon receiving fifth control commands, value units from a first memory section selected by the fifth control commands and to write them as data representing an amount of money into the second memory section and, dependent on the fifth control command, to write or output via the interface data identifying this procedure.

31. Portable data medium as stated in one of the claims 27 to 30, **characterized in that** the control unit of the data medium is controlled by program and comprises a program memory and performs, dependent on the control commands supplied at least by the first terminal, predetermined program parts in the program memory.

32. Portable data medium as stated in claim 27, **characterized in that** the control unit is adapted to perform once a predetermined data transfer in respect to the secret numbers during the first initial connection of a data medium with a first terminal.

33. Portable data medium as stated in one of the claims 27 to 32 for a system as stated in claim 21 having data input means and display means, which are both connected with the control unit.

34. Terminal for a system as stated in one of the claims 21 to 26 for application as first terminal having display elements, operating elements and a slot for introducing a data medium, **characterized in that** a control unit is provided having a memory for storing at least one individual secret information, the control unit being adapted, upon every connection with a portable data medium, to read out the secret information automatically and to transfer it to the portable data medium.

35. Terminal as stated in claim 34, **characterized in that** the control unit is adapted to perform, during the first initial connection of the terminal with a portable data medium, automatically a single predetermined data transfer in respect to the secret information.

36. Terminal as stated in claim 34 or 35, **characterized in that** the control unit is adapted to supply, upon a predetermined actuation of the operating elements, a control command to a data medium connected with the terminal to release the transfer of data determined by the contents of the input memory from a second memory section to a first memory section.

37. System as stated in claim 21 comprising a data medium having a control unit to perform a plurality of functions, an interface for providing a communication connection with the control unit and a plurality of visible designations on the data medium, each designation corresponding to a function, and a user terminal for receiving the data medium and for connecting with the interface for a communication with the control unit, the data medium having a specific position in the inserted state relatively to the terminal, and the terminal having a plurality of buttons, each being located opposite a designation on the data medium, and function means connected with the buttons for releasing a selected function in the control unit when the button corresponding with the designation is actuated.

38. System as stated in claim 37, **characterized in that** the data medium comprises a plurality of memories each of which contain data corresponding to the payment of a specific service provider, the plurality of designations corresponding to a plurality of different service providers and each of the buttons being operable for payment of a specific service provider.

39. System as stated in claim 37, **characterized in that** the data medium comprises a plurality of memories each containing program data corresponding to a different function, the plurality of designations corresponding to the plurality of different functions and the plurality of buttons can be actuated to perform a corresponding of the different functions.

40. System as stated in claim 21 comprising a data medium having a chip for performing active functions demanding high power and passive functions demanding low power, the chip having at least one contact for galvanically engaging a terminal contact to receive electrical power to perform the active functions and a contactless coupling unit connected with the chip and extending over the data medium for coupling with the terminal to perform passive functions, and comprising a user terminal having a source of electrical energy and at least one contact for engaging the chip contact when the data medium is inserted in the user terminal to supply power to the chip to perform active functions when receiving signals via a loose coupling from the contactless coupling unit.

41. System as stated in claim 40, **characterized in that** the source of energy is a battery in the user terminal.

42. System as stated in claim 40, **characterized in that** the coupling unit connected with the chip is used for active functions during close coupling and for passive functions during loose coupling.

## Revendications

1. Procédé de paiement de prestations utilisées ou à utiliser proposées par des prestataires, à l'aide de supports de données portables dont chacun comprend une mémoire avec au moins deux sections de mémoire, dont au moins une première section de mémoire et une deuxième section de mémoire sont prévues pour l'enregistrement de données représentant notamment une somme d'argent, moyennant quoi pour inscrire des données dans la première section de mémoire d'un support de données, celui-ci est mis en interaction avec un de plusieurs premiers terminaux pour, en fonction d'une première manipulation du premier terminal, débiter une somme d'argent prédéterminée de la deuxième section de mémoire du support de données pour l'inscrire dans la première section de mémoire, et où, pour utiliser une prestation proposée par un prestataire, le support de données est mis en interaction avec un deuxième terminal et une somme d'argent est débitée de la première section de mémoire, **caractérisé en ce qu'**entre respectivement un support de données déterminé et un premier terminal déterminé, il existe une affectation sans équivoque, irréversible et contrôlable indépendante d'autres supports de données et d'autres premiers terminaux.

2. Procédé selon la revendication 1, **caractérisé en ce que** l'affectation est secrète.

3. Procédé selon la revendication 1 ou 2, **caractérisé en ce que**, lors de la première liaison d'un support de données déterminé avec un premier terminal déterminé, l'affectation sans équivoque, irréversible et contrôlable entre ce support de données et ce premier terminal est établie **en ce qu'**une information est transmise par l'un de ces deux éléments vers respectivement l'autre élément et mémorisée dans au moins l'un des deux éléments.

4. Procédé selon la revendication 3, **caractérisé en ce que** la transmission de l'information n'a lieu qu'après introduction préalable d'une information secrète dans le premier terminal.

5. Procédé selon la revendication 3 ou 4, **caractérisé en ce que**, lors d'une liaison suivant la première liaison du support de données déterminé avec un autre premier terminal, l'information n'est transmise qu'après introduction préalable d'une information secrète dans cet autre terminal et comparaison réussie avec une information secrète contenue dans le support de données, et **en ce qu'**après un nombre de fois prédéterminé où le support de données est relié à un autre premier terminal et que l'information secrète est introduite, aucune information n'est plus transmise.

6. Procédé selon l'une des revendications précédentes, **caractérisé en ce qu'**avant la première liaison d'un support de données avec un premier terminal, le débit de sommes d'argent par un deuxième terminal, lors d'une liaison du support de données avec le deuxième terminal, est autorisé sans transfert préalable d'une somme d'argent depuis la deuxième section de mémoire dans une première section de mémoire.

7. Procédé selon l'une des revendications 1 à 5, **caractérisé en ce que**, dans au moins l'un des supports de données, une mémoire d'entrée est disposée, dans laquelle on peut introduire des données représentant une somme d'argent, après l'établissement d'une interaction de ce support de données avec le premier terminal associé la somme d'argent introduite dans la mémoire d'entrée étant affichée, et **en ce qu'**après un signal de validation par le premier terminal, cette somme d'argent est transférée depuis la deuxième section de mémoire dans l'au moins première section de mémoire.

8. Procédé selon la revendication 7, **caractérisé en ce qu'**après l'établissement d'une interaction d'un tel support de données avec un deuxième terminal, une somme d'argent déterminée est inscrite par ce dernier dans la mémoire d'entrée.

9. Procédé selon l'une des revendications précédentes, **caractérisé en ce que** le support de données associé au premier terminal affecté transfère activement, par une manipulation prédéterminée du premier terminal, la somme d'agent contenue dans la première section de mémoire vers le deuxième terminal.

10. Procédé selon l'une des revendications précédentes, comprenant plusieurs deuxièmes terminaux, le support de données étant mis en interaction avec l'un des deuxièmes terminaux, **caractérisé en ce qu'**au moins certains des deuxièmes terminaux transmettent un signal d'identification au support ,de données et incitent ce dernier à transférer une somme d'argent en fonction du signal d'identification, directement sans utiliser le premier terminal, depuis la deuxième section de mémoire dans la ou une première section de mémoire et depuis celle-ci dans le deuxième terminal.

11. Procédé selon l'une des revendications 1 à 5, **caractérisé en ce que** plusieurs premières sections de mémoire sont prévues, dont au moins deux sont respectivement affectées à un prestataire différent parmi plusieurs, et **en ce que** la section de mémoire, dans laquelle des sommes d'argent sont inscrites, est sélectionnée lors de la liaison avec le premier terminal ou un troisième terminal, le troisième terminal étant relié à un calculateur de tenue de compte.

12. Procédé selon la revendication 11, **caractérisé en ce que**, dans au moins l'une des premières sections de mémoire, les sommes d'argent sont inscrites en forme de données représentant des unités de valeur, et **en ce que**, pour utiliser une prestation proposée par un prestataire déterminé, des unités de valeur sont invalidées par le deuxième terminal dans cette première section de mémoire affectée à ce prestataire, en modifiant des données correspondantes.

13. Procédé selon la revendication 12, **caractérisé en ce qu'**aux unités de valeur contenues dans au moins une première section de mémoire des repères de débit sont affectés, qui sont inscrits lors de la modification des données représentant les unités de valeur et qui peuvent être lus depuis l'extérieur du support de données.

14. Procédé selon la revendication 12 ou 13, **caractérisé en ce que** le support de données est mis en interaction avec le premier terminal affecté pour transférer des données représentant une somme d'argent depuis la deuxième section de mémoire, notamment en forme de données représentant des unités de valeur, dans une première section de mémoire sélectionnable, et pour enregistrer dans une troisième section de mémoire des données indiquant ce transfert, qui indiquent notamment le prestataire affecté à la première section de mémoire ainsi que la somme d'argent, ces données étant lues automatiquement à chaque liaison du support de données avec un troisième terminal et transmises au calculateur associé à ce dernier.

15. Procédé selon la revendication 12 ou 13, **caractérisé en ce que** le support de données est mis en interaction avec un troisième terminal pour transférer, par une première manipulation du troisième terminal, des données représentant une somme d'argent depuis la deuxième section de mémoire, notamment en forme de données représentant des unités de valeur, dans une première section de mémoire sélectionnable, et pour transmettre des données indiquant ce transfert par l'intermédiaire du troisième terminal au calculateur associé à ce dernier.

16. Procédé selon l'une des revendications 12 à 15, **caractérisé en ce que**, par une deuxième manipulation du troisième terminal, les unités de valeur contenues dans une première section de mémoire sélectionnable sont débitées et enregistrées sous forme d'une somme d'argent dans la deuxième section de mémoire, et **en ce que** des données indiquant cette opération sont transmises par le troisième terminal au calculateur associé à ce dernier.

17. Procédé selon l'une des revendications 12 à 15, **caractérisé en ce que** par une deuxième manipulation du premier terminal, les unités de valeur contenues dans une première section de mémoire sélectionnable sont débitées et enregistrées sous forme d'une somme d'argent dans la deuxième section de mémoire, et **en ce que** des données indiquant cette opération sont inscrites dans la troisième section de mémoire, et **en ce que** ces données, à chaque liaison du support de données avec un troisième terminal, sont automatiquement lues et transmises au calculateur associé à ce dernier.

18. Procédé selon l'une des revendications 12 à 15, **caractérisé en ce que** les unités de valeur contenues dans au moins une première section de mémoire présentent un repère parmi plusieurs, qui sont affectés à différents prestataires de prestations du même type, et **en ce qu'**en fonction de la manipulation du troisième terminal, une somme d'argent prédéterminée est débitée de la deuxième section de mémoire et enregistrée dans une première section de mémoire sous forme d'unités de valeurs avec un premier repère sélectionnable, et **en ce que** des données indiquant cette opération sont transmises par le troisième terminal au calculateur associé à ce dernier.

19. Procédé selon l'une des revendications 11 à 15, **caractérisé en ce que** le débit d'une somme d'argent sélectionnée de la deuxième section de mémoire et l'inscription de cette somme d'argent dans l'au moins une première section de mémoire, n'affecte que provisoirement cette somme d'argent à cette au moins une section de mémoire, le support de données étant mis en liaison avec le troisième terminal pour créditer un prestataire déterminé, qui est affecté à l'au moins une section de mémoire, de la somme d'argent sélectionnée, et pour ensuite autoriser la somme d'argent affectée dans l'au moins une première section de mémoire, afin de permettre le débit d'argent de l'au moins une première section de mémoire lorsque le support de données est mis en liaison avec un terminal associé à ce prestataire déterminé.

20. Procédé selon l'une des revendications 12 à 15, **caractérisé en ce qu'**au moins une des premières sections de mémoire présente un autre repère représentant une date, qui est actualisée à chaque modification du contenu de la première section de mémoire concernée, et qui, lorsque le support de données est mis en interaction avec un troisième terminal, est comparée à la date actuelle, en cas de dépassement d'une différence prédéterminée entre la date actuelle et la date selon l'autre repère les unités de valeur de la première section de mémoire concernée étant débitées et transférées sous forme d'une somme d'argent dans la deuxième section de mémoire, et **en ce que** des données indiquant ce transfert sont transmises par le troisième terminal au calculateur associé à ce dernier.

21. Système pour la mise en oeuvre du procédé selon la revendication 1, comprenant des supports de données portables qui contiennent chacun une unité de commande et une mémoire avec au moins une première section de mémoire et une deuxième section de mémoire, et plusieurs terminaux auxquels chaque support de données peut être relié pour échanger des informations, des premiers terminaux étant affectés à des supports de données et prévus pour, après vérification réussie de l'affectation lors d'une première manipulation prédéterminée, commander l'unité de commande d'un support de données relié au premier terminal pour modifier des données représentant des sommes d'argent dans la deuxième section de mémoire et dans la première section de mémoire, l'une en fonction de l'autre, et des deuxièmes terminaux étant prévus pour commander l'unité de commande d'un support de données associée à ceux-ci pour modifier les données d'une première section de mémoire, **caractérisé en ce qu'**au moins quelques supports de données et premiers terminaux comprennent respectivement une mémoire de chiffre secret destinée à mémoriser, pour respectivement un support de données déterminé et un terminal déterminé, respectivement un chiffre secret affecté sans équivoque individuellement l'un à l'autre, et **en ce que** le support de données et le premier terminal sont prévus pour, à chaque liaison, n'autoriser la modification des données l'une en fonction de l'autre dans la deuxième section de mémoire et dans la première section de mémoire sélectionnée, qu'après le constat d'une relation prédéterminée entre les chiffres secrets dans le support de données.

22. Système selon la revendication 21, **caractérisé en ce que** les supports de données et les premiers terminaux sont prévus pour réaliser, à la première liaison, une transmission des données unique prédéterminée, qui définit les chiffres secrets pour les deux mémoires de chiffres secrets.

23. Système selon la revendication 21 ou 22, **caractérisé en ce que** les supports de données présentent une mémoire d'entrée, et **en ce que** les premiers terminaux sont prévus pour commander l'unité de. commande du support de données pour transférer une somme d'argent correspondant au contenu de la mémoire d'entrée depuis la deuxième section de mémoire dans l'au moins une première section de mémoire.

24. Système selon l'une des revendications 21 à 23, **caractérisé en ce que** la mémoire des supports de données présente plusieurs premières sections de mémoire, et **en ce que** les premiers terminaux sont prévus pour inscrire, en fonction de leur manipulation, des unités de valeur dans une première section de mémoire sélectionnée, et **en ce que** l'unité de commande des supports de données est prévue pour inscrire des données indiquant cette inscription d'unités de valeurs dans une troisième section de mémoire, et **en ce que** les deuxièmes terminaux sont prévus pour ne modifier des données que dans une première section de mémoire affectée au deuxième terminal concerné.

25. Système selon la revendication 24, caractérisé en qu'au moins un troisième terminal est prévu, auquel les supports de données peuvent être reliés pour commander, lors d'une première manipulation prédéterminée du troisième terminal, l'unité de commande des supports de données pour transmettre et inscrire des données représentant des sommes d'argent depuis un calculateur reliée au troisième terminal dans la deuxième section de mémoire et pour transmettre des données depuis la troisième section de mémoire dans le calculateur.

26. Système selon la revendication 25, **caractérisé en ce que** lors d'une première manipulation du troisième terminal, l'unité de commande des supports de données peut être commandée pour modifier les unes en fonction des autres des données dans la deuxième section de mémoire et dans une première section de mémoire sélectionnée, et pour transmettre des données indiquant cette modification par le troisième terminal au calculateur associé à ce dernier.

27. Support de données portable pour un système selon l'une des revendications 21 à 26, comprenant une unité de commande et une mémoire avec au moins une première section de mémoire et une deuxième section de mémoire, et avec une interface vers l'extérieur qui est couplée avec la mémoire et l'unité de commande, pour fournir à la mémoire des données représentant des sommes d'argent et pour fournir à l'unité de commande des instructions de commande, l'unité de commandé étant prévue pour ne modifier des données représentant des sommes d'argent que dans une première section de mémoire, suite aux premières instructions de commande, pour débiter des données représentant des sommes d'argent de la deuxième section de mémoire et les inscrire dans une première section de mémoire, suite aux deuxièmes instructions de commande, et pour inscrire des données représentant des sommes d'argent entrées par l'intermédiaire de l'interface dans la deuxième section de mémoire, suite aux troisièmes instructions de commande, **caractérisé en ce qu'**une mémoire de chiffres secrets pour mémoriser un chiffre secret individuel et un dispositif de comparaison sont prévus, qui n'autorise l'unité de commande, après réception des deuxièmes instructions de commande, à débiter des données représentant des sommes d'argent depuis la deuxième section de mémoire, que si un chiffre secret fourni remplit une relation prédéterminée avec le chiffre secret mémorisé.

28. Support de données portable selon la revendication 27, comprenant une mémoire d'entrée pour recevoir des données représentant une somme d'argent, l'unité de commande étant prévue pour débiter de la deuxième section de mémoire, suite aux deuxièmes instructions de commande, des données correspondant au contenu de la mémoire d'entrée, et pour les inscrire dans une première section de mémoire.

29. Support de données portable selon la revendication 27 ou 28, **caractérisé en ce que** la mémoire présente plusieurs premières sections de mémoire et une troisième section de mémoire, et **en ce que** l'unité de commande est prévue pour modifier des données dans une première section de mémoire sélectionnée par la première instruction de commande, et pour inscrire des données représentant des unités de valeur dans une première section de mémoire sélectionnée par la deuxième instruction de commande, et pour inscrire dans la troisième section de mémoire ou, en fonction des deuxièmes instructions de commande, des données caractérisant cette opération, ou pour les émettre par l'intermédiaire de l'interface, et pour lire les données de la troisième section de mémoire, suite aux quatrièmes instructions de commande, et les émettre par l'intermédiaire de l'interface.

30. Support de données portable selon l'une des revendications 27 à 29, **caractérisé en ce que** l'unité de commande est prévue pour débiter, suite aux cinquièmes instructions de commande, des unités de valeur d'une première section de mémoire sélectionnée par les cinquièmes instructions de commande, et pour les inscrire en tant que données représentant une somme d'argent dans la deuxième section de mémoire, et pour inscrire dans la troisième section de mémoire des données caractérisant cette opération, en fonction de la cinquième instruction de commande ou pour les émettre par l'intermédiaire de l'interface.

31. Support de données portable selon l'une des revendications 27 à 30, **caractérisé en ce que** l'unité de commande du support de données est commandée par programme, qu'elle contient une mémoire de programme et, qu'elle exécute, en fonction des instructions de commande fournies au moins par le premier terminal, des parties de programme prédéterminées dans la mémoire de programme.

32. Support de données portable selon la revendication 27, **caractérisé en ce que** l'unité de commande est prévue pour effectuer une seule fois, lors de la première liaison du support de données avec un premier terminal, une transmission de données prédéterminée concernant les chiffres secrets.

33. Support de données portable selon l'une des revendications 27 à 32 pour un système selon la revendication 21, comprenant un moyen d'entrée de données et un moyen d'affichage, les deux étant reliés à l'unité de commande.

34. Terminal pour un système selon l'une des revendications 21 à 26 pour être utilisé comme premier terminal, comprenant des éléments d'affichage, des éléments de manipulation et un dispositif de réception pour la liaison avec un support de données portable, **caractérisé en ce qu'**un dispositif de commande est prévu, comportant une mémoire pour enregistrer au moins une information secrète individuelle, le dispositif de commande étant prévu pour lire automatiquement l'information secrète à chaque liaison avec un support de données et pour la transmettre au support de données portable.

35. Terminal selon la revendication 34, **caractérisé en ce que** le dispositif de commande est prévu pour effectuer automatiquement et une seule fois, lors de la première liaison du terminal avec un support de données portable, une transmission de données prédéterminée concernant l'information secrète.

36. Terminal selon la revendication 34 ou 35, **caractérisé en ce que** le dispositif de commande est prévu pour émettre, lors d'une manipulation prédéterminée des éléments de manipulation, une instruction de commande vers un support de données associé au terminal, qui déclenche dans le support de données la transmission de données définies par le contenu d'une mémoire d'entrée depuis une deuxième section de mémoire dans une première section de mémoire.

37. Système selon la revendication 21, comprenant un support de données qui présente une unité de commande pour exécuter plusieurs fonctions, une interface pour établir une liaison de communication avec l'unité de commande, et une multitude d'attributs visibles sur le support de données, chaque attribut correspondant à une fonction, et comprenant un terminal utilisateur pour loger le support de données et pour la liaison avec l'interface pour une communication avec l'unité de commande, le support de données, en état logé, ayant une certaine position par rapport au terminal, et en ce que le terminal présente une multitude de touches, chacune des touches étant située face à un attribut sur le support de données, et des moyens fonctionnels reliés aux touches, qui déclenchent une fonction sélectionnée dans l'unité de commande lorsque la touche correspondant à l'attribut est actionnée.

38. Système selon la revendication 37, **caractérisé en ce que** le support de données présente une multitude de mémoires dont chacune contient des données correspondant au paiement d'un prestataire déterminé, et la multitude d'attributs correspondant à une multitude de prestataires différents, ;et chacune des touches pouvant être actionnée pour payer un prestataire déterminé.

39. Système selon la revendication 37, **caractérisé en ce que** le support de données présente une multitude de mémoires dont chacune contient des données de programme selon une fonction différente, et la multitude d'attributs correspondant à la multitude de fonctions différentes, et la multitude de touches pouvant être actionnée pour exécuter l'une des différentes correspondantes.

40. Système selon la revendication 21, comprenant un support de données qui contient une puce pour l'exécution de fonctions actives à grande consommation de puissance et de fonctions passives à faible consommation de puissance, la puce présentant au moins un contact pour le bonding galvanique d'un contact de terminal, afin de recevoir de la puissance électrique pour exécuter les fonctions actives, ainsi qu'un dispositif de couplage sans contact relié à la puce, qui s'étend sur le support de données pour un couplage avec un terminal pour exécuter des fonctions passives, et comprenant un terminal utilisateur présentant une source d'énergie électrique et au moins un contact pour le collage du contact de puce, lorsque le support de données est logé dans le terminal utilisateur, pour alimenter la puce en puissance à l'aide de la source d'énergie pour exécuter des fonctions actives, lorsque des signaux arrivent par l'intermédiaire d'un couplage desserré depuis le dispositif de couplage sans contact.

41. Système selon la revendication 40, **caractérisé en ce que** la source d'énergie est une pile dans le terminal utilisateur.

42. Système selon la revendication 40, **caractérisé en ce que** le dispositif de couplage relié à la puce sert aux fonctions actives en cas d'un couplage serré et aux fonctions passives en cas d'un couplage desserré.
